(19) Europäisches Patentamt
European Patent Office
Office européen des brevets

(11) **EP 4 128 152 B1**

(12) **FASCICULE DE BREVET EUROPEEN**

(45) Date de publication et mention
de la délivrance du brevet:
**22.11.2023 Bulletin 2023/47**

(21) Numéro de dépôt: **21716066.2**

(22) Date de dépôt: **15.03.2021**

(51) Classification Internationale des Brevets (IPC):
**G06T 7/12** *(2017.01)*      **G06T 7/181** *(2017.01)*

(52) Classification Coopérative des Brevets (CPC):
**G06T 7/12; G06T 7/181;** G06T 2207/10081;
G06T 2207/30172

(86) Numéro de dépôt international:
**PCT/EP2021/056463**

(87) Numéro de publication internationale:
**WO 2021/197813 (07.10.2021 Gazette 2021/40)**

(54) **PROCÉDÉ ET SYSTÈME DE SQUELETTISATION DES TORONS D'UNE PIÈCE EN MATÉRIAU COMPOSITE DANS UNE IMAGE 3D**

VERFAHREN UND SYSTEM ZUR SKELETTIERUNG DER STRÄNGE EINES VERBUNDWERKSTOFFTEILS IN EINEM 3D-BILD

METHOD AND SYSTEM FOR SKELETONISING THE STRANDS OF A COMPOSITE MATERIAL PART IN A 3D IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2020 FR 2003093**

(43) Date de publication de la demande:
**08.02.2023 Bulletin 2023/06**

(73) Titulaire: **SAFRAN**
**75015 Paris (FR)**

(72) Inventeurs:
  • **BRION, Véronique**
    **77550 MOISSY-CRAMAYEL (FR)**
  • **BELKHIR, Nacim**
    **77550 MOISSY-CRAMAYEL (FR)**
  • **HERNANDEZ LONDONO, Jorge Eduardo**
    **77550 MOISSY-CRAMAYEL (FR)**
  • **TRULLO RAMIREZ, Roger Fernando**
    **77550 MOISSY-CRAMAYEL (FR)**

(74) Mandataire: **Argyma**
    **14 Boulevard de Strasbourg**
    **31000 Toulouse (FR)**

(56) Documents cités:
**FR-A1- 3 050 274**

• **MICHAEL W. CZABAJ ET AL: "Numerical reconstruction of graphite/epoxy composite microstructure based on sub-micron resolution X-ray computed tomography", COMPOSITES SCIENCE AND TECHNOLOGY, vol. 105, 1 décembre 2014 (2014-12-01), pages 174-182, XP055752401, AMSTERDAM, NL ISSN: 0266-3538, DOI: 10.1016/j.compscitech.2014.10.017**
• **PETER J. CREVELING ET AL: "A fiber-segmentation algorithm for composites imaged using X-ray microtomography: Development and validation", COMPOSITES PART A: APPLIED SCIENCE AND MANUFACTURING, vol. 126, 1 novembre 2019 (2019-11-01), page 105606, XP055752415, AMSTERDAM, NL ISSN: 1359-835X, DOI: 10.1016/j.compositesa.2019.105606**

**Description**

**Domaine technique**

La présente invention concerne le domaine de la détermination de la structure interne d'une pièce en matériau composite, et vise plus particulièrement un procédé et un système de squelettisation des torons d'une pièce en matériau composite dans une image 3D.

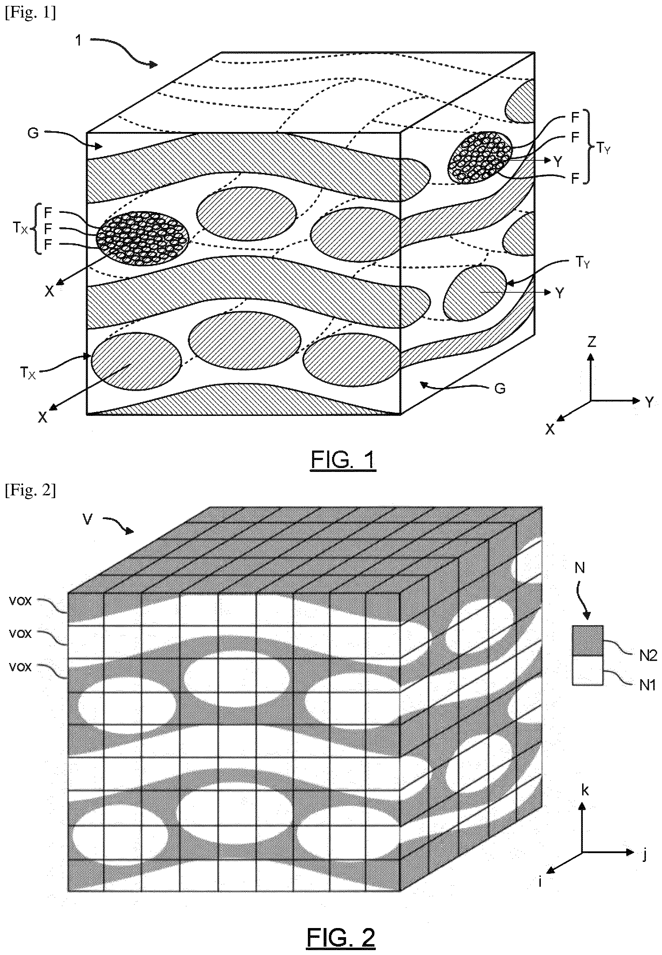

On connaît dans l'art antérieur une aube en matériau composite 1, dont une portion de la paroi est illustrée sur la [Fig.1], comprenant des fibres de renfort F, par exemple en carbone, noyées dans une matrice G, telle qu'une matrice organique à base de résine polymère, servant de liant et conférant à l'aube 1 sa forme extérieure. De manière connue, les fibres de renfort F sont organisées en faisceaux de fibres, connus sous le terme de « torons TX, TY », comprenant de l'ordre d'une centaine à un millier de fibres de renfort F tressées ou alignées les unes avec les autres. Les torons TX, TY sont quant à eux agencés entre eux par tissage et/ou empilement, tel que dans l'exemple de la [Fig.1], un empilement de torons longitudinaux TX tissés avec des torons transversaux TY selon un repère orthogonal (X, Y, Z) défini par la direction de l'empilement Z, la direction longitudinale X et la direction transversale Y.

Pour vérifier les propriétés mécaniques d'une aube en matériau composite 1 et notamment sa résistance à un endommagement, une analyse basée sur la forme extérieure de l'aube 1 n'est pas suffisante. Il est en effet nécessaire d'analyser la position et la forme des torons $T_X$, $T_Y$ au sein de l'aube 1 afin de détecter tout défaut interne. En particulier, il est souhaité de détecter des torons $T_X$, $T_Y$ qui sont rompus ou endommagés ou encore des irrégularités dans leur tissage.

Pour cela, comme illustré sur la [Fig.2], il est connu d'acquérir par tomographie une image 3D en niveaux de gris N de l'aube 1 à partir d'un grand nombre de radiographies 2D obtenues en bombardant l'aube 1 de rayons X suivant différents angles. Une telle image 3D, dite « volume tomographique V » par la suite, est divisée en voxels vox s'étendant selon un repère orthogonal i, j, k. Chaque voxel vox comprend un niveau de gris N donné, correspondant au coefficient d'absorption de rayons X moyen de la zone d'aube 1 illustrée sur le voxel vox. Les voxels vox de niveaux de gris N sombres correspondent ainsi à une zone d'aube 1 comprenant majoritairement un matériau de faible coefficient d'absorption des rayons X N2, à savoir de la matrice G. Les voxels vox de niveaux de gris N clairs correspondent quant à eux à une zone d'aube 1 comprenant majoritairement un matériau de grand coefficient d'absorption N1, à savoir des torons TX, TY.

En pratique, une aube en matériau composite 1 utilisée dans l'industrie aéronautique possède une densité de torons $T_X$, $T_Y$ comprise entre 80% et 90%, c'est-à-dire que les torons $T_X$, $T_Y$ sont agencés de manière très compactée au sein de la matrice G, rendant l'identification des torons $T_X$, $T_Y$ difficile dans le volume tomographique V. En outre, la plage de niveaux de gris diffère d'une radiographie 2D à l'autre en fonction des conditions d'acquisition. Le volume tomographique V est en outre imparfait, comportant des artefacts, rendant l'identification des torons $T_X$, $T_Y$ d'autant plus complexe.

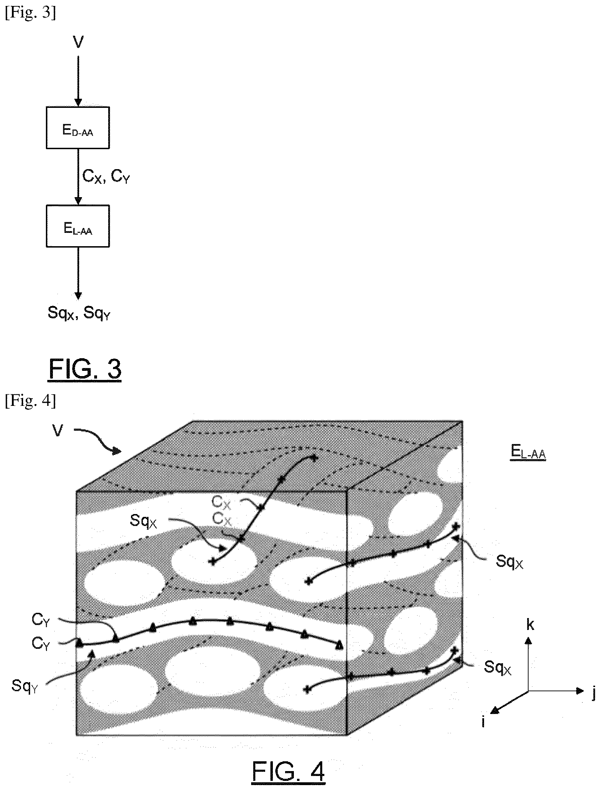

En référence à la [Fig.3], pour analyser la forme et la position des torons TX, TY dans le volume tomographique V, il est connu un procédé de squelettisation des torons TX, TY par détection ED-AA puis liaison EL-AA de centres de section orientés CX, CY de chaque toron TX, TY dans le volume tomographique V. Dans l'exemple de la [Fig.4], des centres longitudinaux CX et transversaux CY de torons respectivement longitudinaux TX et transversaux TY sont ainsi déterminés par la détection ED-AA détaillée ci-après puis les centres CX, CY associés à un même toron TX, TY sont reliés entre eux. Les courbes obtenues sont désignées « squelettes SqX, SqY des torons TX, TY » et permettent d'accéder à la position des torons TX, TY dans le volume tomographique V.

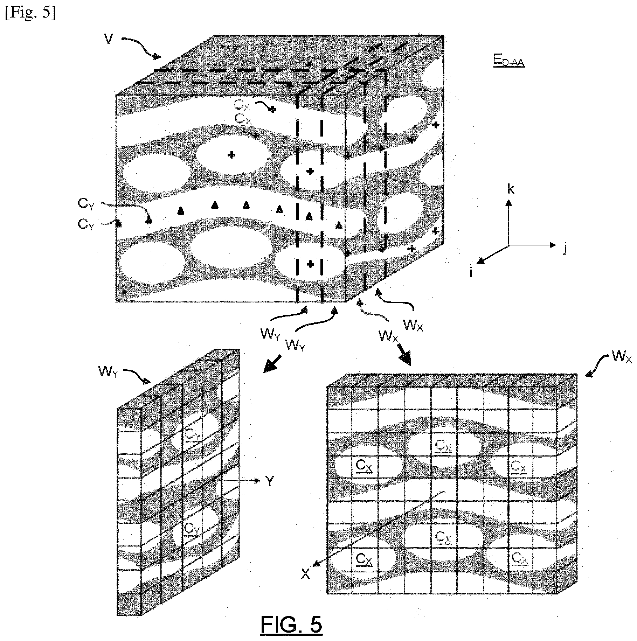

Plus précisément, en référence à la [Fig.5], la détection ED-AA des centres CX, CY des torons TX, TY est réalisée de manière connue sur des tranches WX, WY du volume tomographique V normales à l'axe des torons TX, TY. Dans cet exemple, les centres longitudinaux CX et transversaux CY sont ainsi déterminés sur des tranches WX, WY respectivement normales à l'axe longitudinal X et l'axe transversal Y, dites « tranches longitudinales WX » et « tranches transversales WY ». De manière connue, un opérateur annote manuellement les centres CX, CY sur environ 1% des tranches WX, WY par interprétation visuelle des niveaux de gris N. Pour chaque toron, les centres CX, CY des autres tranches WX, WY sont ensuite déterminés par interpolation à partir des centres CX, CY déterminés manuellement.

Un tel procédé de squelettisation des torons $T_X$, $T_Y$ d'une aube 1 est laborieux et coûteux en temps et en ressources. En particulier, l'annotation manuelle nécessite environ cinq jours de travail pour déterminer le squelette $Sq_X$, $Sq_Y$ d'environ 800 torons $T_X$, $T_Y$. L'annotation manuelle est en outre soumise à une éventuelle erreur et une interprétation propre à l'opérateur, ce qui affecte également la précision des centres $C_X$, $C_Y$ interpolés. En outre, un tel procédé de squelettisation ne permet pas de détecter des défauts parmi les centres interpolés.

Pour supprimer ces inconvénients, il est connu par l'article intitulé « A 3D image analysis method for fibrous microstructures : Discretization and fibers tracking » publié en 2012, de binariser le volume tomographique en affectant un premier label aux zones de niveaux de gris claires et un deuxième label aux zones de niveau de gris sombres. La détection des centres des torons est ensuite réalisée en déterminant les centres des zones de premier label, attribuées aux torons. Un tel procédé ne permet toutefois pas une squelettisation exacte et précise des torons $T_X$, $T_Y$ d'une aube 1 de densité de torons $T_X$, $T_Y$ importante, la binarisation conduisant alors à des zones de premier label étendues de plusieurs torons contigus indistinguables les uns des autres. L'article « Towards the 3D in-situ characterization of deformation micro-mechanisms within a compressed bundle of fibres », publié en 2011, enseigne également de binariser le volume tomographique puis de détecter, sur plusieurs coupes, les centres des zones de label attribué aux torons.

Il est également connu par l'article « FiberScout : an interactive tool for exploring and analyzing fiber reinforced polymers » publié en 2014 de déterminer, directement sur le volume tomographique, le squelette des torons à partir des positions de leurs extrémités et de leur orientation locale en plusieurs points. L'orientation locale d'un toron en un point donné est obtenue en déterminant, pour un voxel donné, le voxel voisin de niveau de gris le plus proche du sien. Un tel procédé ne permet pas non plus une squelettisation exacte et précise pour une aube 1 de densité de torons $T_X$, $T_Y$ importante, la détermination de l'orientation locale des torons pouvant être faussée par la proximité des torons voisins, en particulier contigus, et par les artefacts du volume tomographique. L'article intitulé « Composites : Part A, Fiber orientation measurements in composite materials » publié en 2006 présente également un procédé de squelettisation à partir de l'orientation des torons, en déterminant une tranche du volume tomographique de normale ni parallèle ni orthogonale à l'axe des torons, de sorte que les sections des torons sur la tranche soient sensiblement elliptiques. L'orientation des torons est alors déterminée à partir de la forme elliptique des sections. Ce procédé présente toutefois les mêmes inconvénients que précédemment.

De manière incidente, on connaît par l'article « Analysis of woven fabric structure using X-ray CT images » publié en 2005 un procédé de squelettisation des fils d'un tissu dans un volume tomographique, afin d'analyser son tissage. Dans un premier temps, des tranches de normale orthogonale à l'axe des fils du tissu sont déterminées dans le volume tomographique et binarisées tel que décrit précédemment. Les centres des fils de tissu sont ensuite annotés manuellement sur une première tranche. Sur la tranche voisine suivante, les centres des fils sont déterminés par corrélation avec les centres déterminés sur la première tranche, en recherchant chaque centre d'un fil dans une région de calcul restreinte autour du centre du même fil de la première tranche. La corrélation est réalisée successivement sur chacune des tranches suivantes, de proche en proche. Un tel procédé est peu robuste, car si un centre est mal déterminé sur une tranche, l'erreur risque d'être propagée aux tranches suivantes. En outre, un tel procédé nécessite une binarisation non adaptée pour une aube 1 de densité de torons $T_X$, $T_Y$ élevée, qui plus est dans laquelle les fibres F sont enrobées dans une matrice G contrairement aux fils du tissu.

Il est également connu par l'article « Numerical reconstruction of graphite/epoxy composite microstructure based on sub-micron resolution X-ray computed to-mography » (Composite Science and Technology - 105 2014/174-182) un procédé de reconstruction numérique des fibres unidirectionnelles d'un matériau composite dans lequel les centres sont détectés dans des coupes 2D, en attribuant un score de corrélation à chaque pixel par comparaison avec un patron. Les centres des fibres sont ensuite reliés par prédiction/correction. Un tel procédé présente les mêmes inconvénients que précédemment, à savoir d'être peu précis et sujet à la propagation d'erreurs.

L'invention vise ainsi un procédé et un système de squelettisation des torons d'une aube en matériau composite dans une image 3D, et plus généralement d'une pièce en matériau composite, qui soit précis, fiable et rapide à mettre en oeuvre.

## PRESENTATION DE L'INVENTION

L'invention concerne un procédé de squelettisation des torons d'une pièce en matériau composite dans une image 3D de ladite pièce, ladite image comprenant une pluralité de voxels s'étendant dans un repère orthogonal et comprenant chacun un niveau de gris, ledit procédé étant défini par la revendication 1 et comprenant :

- une phase de détection d'une pluralité de centres de section orientés des torons de la pièce dans l'image et
- une phase de liaison de chaque centre au centre de même orientation le plus proche, afin de relier les centres associés à un même toron, de manière à obtenir le squelette des torons de ladite pièce.

L'invention est remarquable en ce que la phase de détection est mise en oeuvre au moyen d'au moins un volume de référence comprenant une pluralité de voxels, lesdits voxels s'étendant dans le repère orthogonal et comprenant chacun un niveau de gris de manière à ce que le volume de référence comporte un motif de toron centré s'étendant suivant une direction donnée, ladite phase de détection comprenant, pour chaque volume de référence :

- une étape de détermination de portions de l'image comportant un voxel central et de dimension égale à celle du volume de référence,
- une étape de calcul d'un score de corrélation entre le volume de référence et chaque portion de l'image par comparaison du niveau de gris de leurs voxels respectifs, ledit score de corrélation étant associé au voxel central de chaque portion, de manière à obtenir un score de corrélation pour chaque voxel de l'image formant une matrice de scores de corrélation, et

- une étape de détermination des centres de section orientés des torons de la pièce, lesdits centres correspondant aux voxels de l'image dont le score de corrélation correspond à un maximum local de la matrice de scores de corrélation, l'orientation desdits centres étant définie par la direction du motif de toron du volume de référence.

On précise ici que par motif de toron, on désigne un motif d'une tranche transversale de toron inscrite dans le volume de référence. Autrement dit, le motif de toron représente un toron tronqué dans le sens de la longueur et dont la section est entièrement représentée.

Grâce à l'invention, la phase de détection des centres de section des torons est réalisée par corrélation d'images avec un ou plusieurs volume(s) de référence ce qui, par rapport à une annotation manuelle, permet un gain de temps et de ressources en opérateurs et limite de risque d'erreur et d'interprétation propre à un opérateur. Une telle détection est également plus fiable et plus précise car elle est basée sur une corrélation d'images avec un ou plusieurs volume(s) de référence de plusieurs voxels comprenant à minima un motif de toron, ce qui permet de bien discerner les torons et est moins sensible aux artefacts et différences locales de niveaux de gris au sein de l'image 3D de la pièce. Autrement dit, une telle détection permet une corrélation globale dans des portions de l'image 3D de la pièce, ce qui est plus pertinent que la binarisation ou la détermination de l'orientation locale des torons de l'art antérieur. Par ailleurs, une telle détection est plus précise car elle ne nécessite pas d'interpolation comme dans l'art antérieur ce qui permet de détecter des anomalies locales et/ou des discontinuités de torons qui étaient non visibles par interpolation.

Selon un aspect de l'invention, le procédé de squelettisation est un procédé de squelettisation des torons d'une pièce en matériau composite comprenant une densité de torons supérieure à 50%, de préférence comprise entre 80% et 90%. De manière avantageuse, un tel procédé de squelettisation permet de bien discerner des torons compactés au sein d'une matrice, autrement dit contigus, ce que ne permettait pas la binarisation ou la détermination de l'orientation locale des torons de l'art antérieur.

De préférence, l'étape de détermination de portions est mise en oeuvre pour chaque voxel de l'image de la pièce, afin d'obtenir le squelette global des torons de la pièce dans l'image.

Selon un aspect de l'invention, la phase de détection est mise en oeuvre au moyen d'une pluralité de volumes de référence, les motifs de toron desdits volumes de référence s'étendant suivant différentes directions données. De manière avantageuse, les volumes de référence permettent de détecter les torons de toute direction dans l'image de la pièce, au moyen de différents motifs de toron d'orientation correspondante. Le procédé de squelettisation permet ainsi une squelettisation complète des torons de la pièce, en particulier de toutes directions.

Selon un autre aspect de l'invention, la phase de détection est mise en oeuvre au moyen d'une pluralité de volumes de référence, les motifs de toron desdits volumes de référence comportant différentes sections. On précise que la section d'un motif de toron se différencie de celle d'un autre motif de toron par sa forme et/ou sa taille. De manière avantageuse, les volumes de référence permettent de détecter les torons de toute section de l'image 3D de la pièce, en particulier de toute forme et toute taille, au moyen de différents motifs de toron de section correspondante. Le procédé de squelettisation permet ainsi une squelettisation complète des torons de la pièce, en particulier de toutes sections.

Selon un aspect, au moins un volume de référence comprend autour du motif de toron un voisinage comprenant au moins un motif de toron voisin. Avantageusement, un volume de référence comprend un motif de toron central et un ou plusieurs motifs de torons voisins, entiers ou partiels, ce qui permet de réaliser une corrélation d'images qui n'est pas limitée au toron mais analyse également le voisinage. Une telle corrélation est ainsi plus fiable et plus précise.

Selon un aspect de l'invention, la phase de détection est mise en oeuvre au moyen d'une pluralité de volumes de référence, les motifs de toron desdits volumes de référence comportant des voisinages différents. On précise que le voisinage d'un volume de référence se différencie de celui d'un autre volume de référence par la présence ou non d'un ou plusieurs motif(s) de toron, par leur position et/ou par leur section. De manière avantageuse, les volumes de référence permettent de détecter des torons de différents voisinages de l'image 3D de la pièce, en particulier ayant des torons voisins ou non et plus ou moins compactés. Le procédé de squelettisation permet ainsi une squelettisation complète des torons de la pièce, en particulier de tous voisinages.

De préférence, la phase de détection est mise en oeuvre au moyen d'une pluralité de volumes de référence différents en ce que le motif de toron de chaque volume de référence s'étend suivant une direction donnée différente et/ou comporte une section différente et/ou comporte un voisinage différent. Avantageusement, une pluralité de volumes de référence comportant un panel de motifs de torons différents permet de squelettiser tous les torons de l'image 3D de la pièce, et ce de manière précise et fiable.

Selon un aspect de l'invention, lorsque la phase de détection est mise en oeuvre au moyen d'une pluralité de volumes de référence, le procédé de squelettisation comprend une étape de sélection du score de corrélation maximal associé à chaque voxel de l'image 3D de la pièce. Ceci permet avantageusement un gain en précision et en fiabilité en cherchant la meilleure corrélation parmi différents motifs de toron.

Selon un autre aspect de l'invention, le procédé de squelettisation comprend une étape préliminaire de détermination d'au moins un volume de référence par sélection d'une portion ou d'une moyenne de portions de l'image 3D de la pièce comprenant un voxel central et comportant un motif de toron centré s'étendant suivant une direction donnée.

Avantageusement, un volume de référence est adapté à l'image 3D de la pièce à analyser. En particulier, un volume de référence comporte la même plage de niveaux de gris et comporte un motif de toron similaire aux torons présents dans la pièce.

Selon un autre aspect, au moins un volume de référence est obtenu par simulation informatique de tomographies. Avantageusement, un volume de référence peut être déterminé aisément sans analyse préliminaire de l'image 3D de la pièce, en particulier par un opérateur. En outre, un tel volume de référence est universel et ne correspond pas à un toron en particulier de la pièce, qui pourrait correspondre à une exception.

Selon un aspect, le procédé de squelettisation comprend une étape préliminaire de filtrage de l'image 3D de la pièce, de préférence par un filtre de Gabor. De manière avantageuse, un tel filtre permet une meilleure perception des torons pouvant améliorer la détection des centres.

Selon un aspect de l'invention, la phase de liaison comprend :

- une étape de calcul, pour chaque centre de section orienté, de la distance le séparant du centre de même orientation le plus proche et
- lorsque la distance est inférieure à une distance maximale, une étape de tracé de la courbe reliant chaque centre au centre de même orientation le plus proche.

De manière avantageuse, une telle phase de liaison est simple et faible à réaliser. Une telle phase de liaison est en outre fiable et permet de vérifier que les centres ne sont pas trop éloignés les uns des autres, ce qui pourrait indiquer un éventuel défaut de toron, tel qu'une discontinuité.

De préférence, lorsque la distance est supérieure à la distance maximale, un contrôle manuel visuel de la phase de détection des centres est réalisé par un opérateur. De manière avantageuse, l'expertise d'un opérateur pour l'analyse de zones locales où les centres sont anormalement espacés augmente la précision et la fiabilité du procédé de squelettisation.

L'invention concerne également un système de squelettisation pour la mise en oeuvre du procédé de squelettisation des torons d'une pièce en matériau composite dans une image 3D de ladite pièce tel que décrit précédemment, ledit système de squelettisation comprenant au moins une base de données comprenant au moins un volume de référence comportant un motif de toron centré s'étendant suivant une direction donnée, ledit système de squelettisation comprenant au moins un organe de calcul qui, pour chaque volume de référence, est configuré pour :

- déterminer des portions de l'image de dimension égale à celle du volume de référence,
- calculer un score de corrélation entre le volume de référence et chaque portion de l'image par comparaison du niveau de gris de leurs voxels respectifs, ledit score de corrélation étant associé au voxel central de chaque portion, de manière à obtenir un score de corrélation pour chaque voxel de l'image formant une matrice de scores de corrélation, et
- déterminer les centres de section orientés des torons de la pièce, lesdits centres correspondant aux voxels de l'image dont le score de corrélation correspond à un maximum local de la matrice de scores de corrélation, l'orientation desdits centres étant définie par la direction du motif de toron du volume de référence,
- ledit organe de calcul étant de plus configuré pour relier chaque centre au centre de même orientation le plus proche, afin de relier les centres associés à un même toron, de manière à obtenir le squelette des torons de la pièce.

Avantageusement, un tel système de squelettisation permet d'obtenir automatiquement le squelette des torons d'une pièce, sans aide d'un opérateur, grâce à une base de données préalablement remplie. Une telle base de données peut en outre être améliorée au fur et à mesure de son utilisation, par retour d'expérience.

De préférence, l'organe de calcul est configuré pour déterminer au moins un volume de référence par simulation informatique de tomographies.

De préférence, l'organe de calcul est configuré pour filtrer l'image 3D de la pièce, préférentiellement par un filtre de Gabor.

De préférence, dans le cas d'une pluralité de volumes de référence, l'organe de calcul est configuré pour sélectionner le score de corrélation maximal associé à chaque voxel de l'image 3D de la pièce.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

[Fig.1] est une représentation schématique en niveaux de gris d'une portion de la paroi d'une aube en matériau composite comprenant des torons selon l'art antérieur ;

[Fig.2] est une représentation schématique en perspective d'un volume tomographique de la portion de paroi d'aube de la [Fig.1] ;

[Fig.3] est une représentation schématique d'un procédé de squelettisation des torons de la portion de paroi d'aube de la [Fig.1] dans le volume tomographique de la [Fig.2] selon l'art antérieur ;

[Fig.4] est une représentation schématique d'une phase de liaison de centres de section orientés des torons selon le procédé de squelettisation de la [Fig.3] ;

[Fig.5] est une représentation schématique d'une phase de détection des centres de section orientés des torons selon le procédé de squelettisation de la [Fig.3] ;

[Fig.6] est une représentation schématique en perspective d'une portion de paroi d'aube en matériau composite comprenant des torons selon l'invention ;

[Fig.7] est une représentation schématique en niveaux de gris d'un volume tomographique de la portion de paroi d'aube de la [Fig.6] ;

[Fig.8] est une représentation schématique d'un procédé et d'un système de squelettisation des torons de la portion de paroi d'aube de la [Fig.6] dans le volume tomographique de la [Fig.7] selon un mode et une forme de réalisation de l'invention ;

[Fig.9] est une représentation schématique d'une phase de liaison de centres de section orientés des torons selon le procédé de squelettisation de la [Fig.8] ;

[Fig.10A] et

[Fig.10B] sont des représentations schématiques en perspective d'un volume de référence comprenant respectivement un motif de toron longitudinal et un motif de toron transversal pour la mise en oeuvre d'une phase de détection des centres de section orientés des torons selon le procédé de squelettisation de la [Fig.8] ;

[Fig.11A],

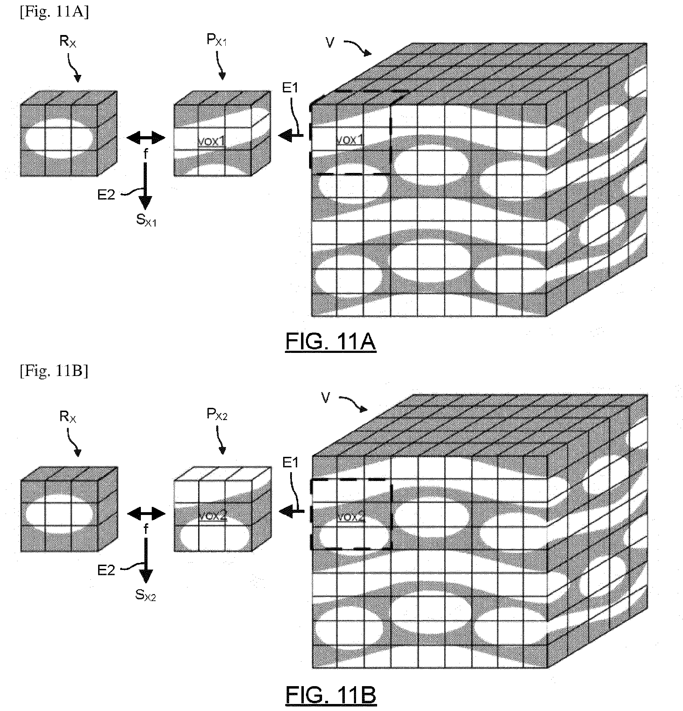

[Fig.11B] et

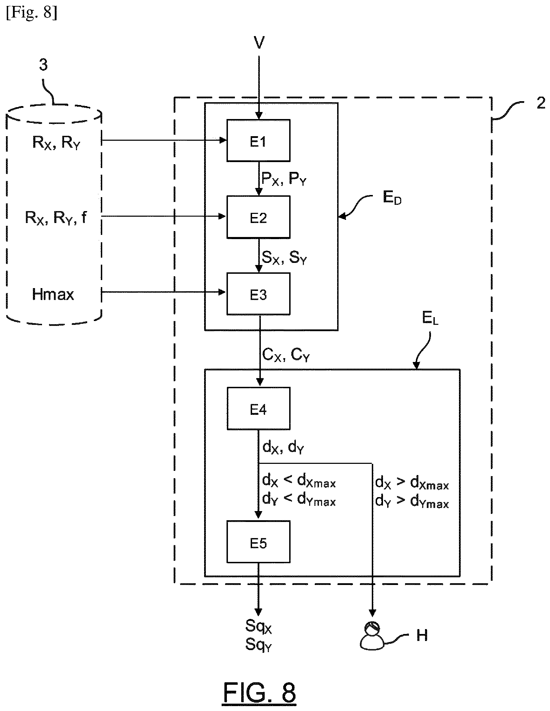

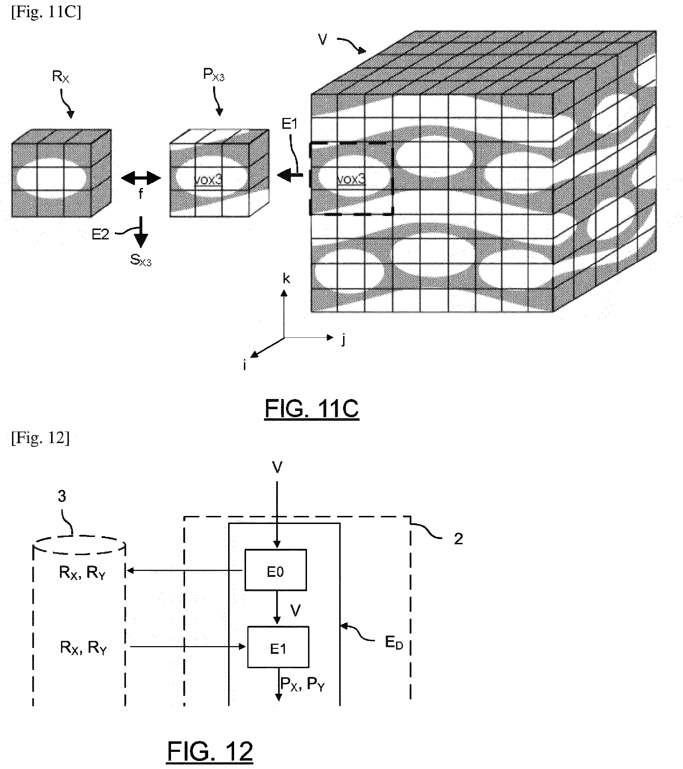

[Fig.11C] sont des représentations schématiques d'une étape de détermination de portions du volume tomographique et d'une étape de calcul d'un score de corrélation pour trois voxels du volume tomographique selon le procédé de squelettisation de la [Fig.8] ;

[Fig.12] est une représentation schématique d'un procédé de squelettisation selon un autre mode de réalisation de l'invention comprenant une étape de détermination d'au moins un volume de référence,

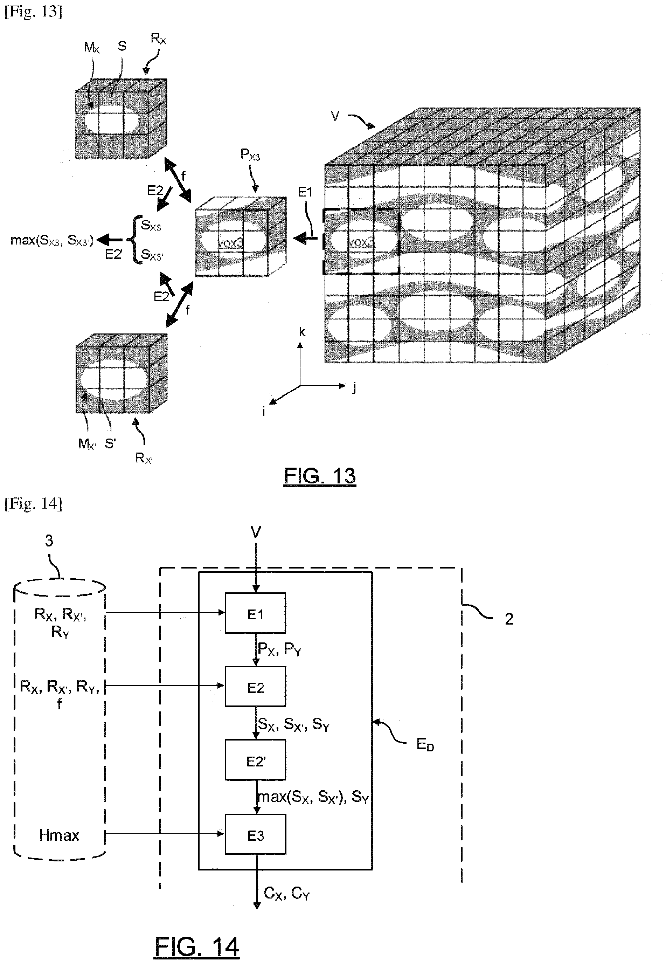

[Fig.13] est une représentation schématique d'un procédé de squelettisation selon un autre mode de réalisation de l'invention au moyen de volumes de référence comportant des motifs de torons de différentes sections,

[Fig.14] est une représentation schématique d'une étape de sélection du score de corrélation maximal associé à un voxel du procédé de squelettisation de la [Fig.14],

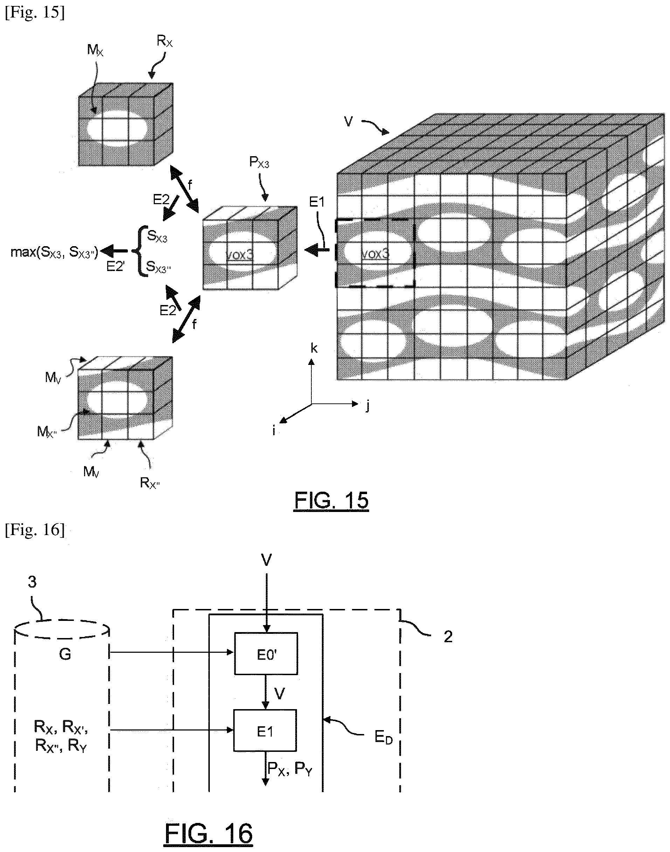

[Fig.15] est une représentation schématique d'un procédé de squelettisation selon un autre mode de réalisation de l'invention au moyen de volumes de référence comportant des motifs de torons comportant différents voisinages et

[Fig.16] est une représentation schématique d'une étape de filtrage du volume de référence d'un procédé de squelettisation selon un mode de réalisation alternatif de l'invention.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

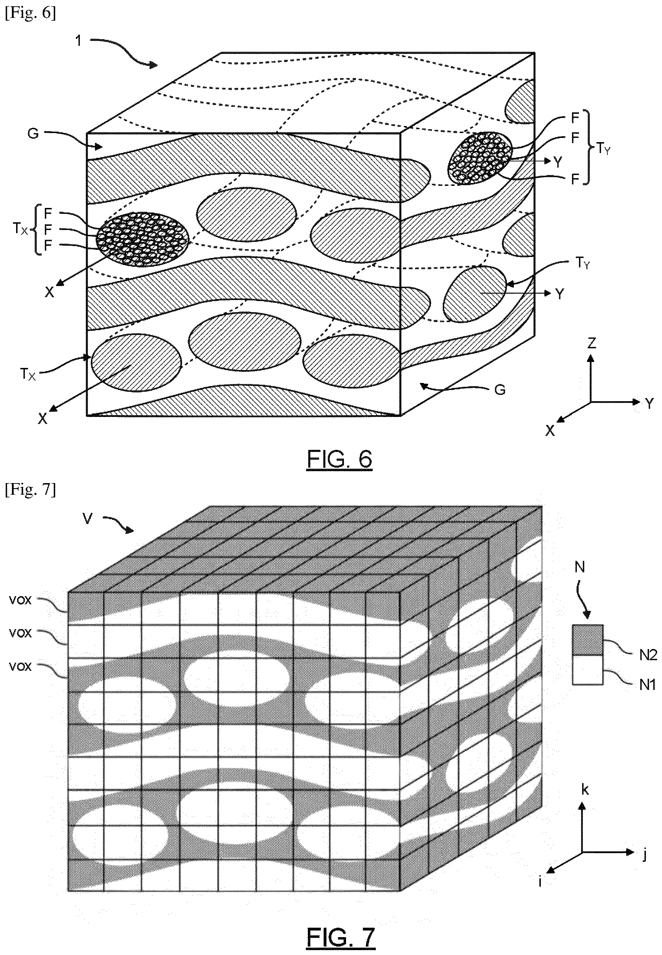

On considère une aube en matériau composite 1, dont une portion de la paroi est représentée sur la [Fig.6], dont on cherche à déterminer la structure interne afin de vérifier les propriétés mécaniques de l'aube 1 et notamment sa résistance à un endommagement.

De manière connue et en référence à la [Fig.6], une telle aube 1 comprend des fibres de renfort F, par exemple en carbone, noyées dans une matrice G, telle qu'une matrice organique à base de résine polymère, servant de liant et conférant à l'aube 1 sa forme extérieure. Les fibres de renfort F sont organisées en faisceaux de fibres, connus sous le terme de « torons TX, TY », comprenant de l'ordre d'une centaine à un millier de fibres de renfort F tressées ou alignées les unes avec les autres. Les torons TX, TY sont quant à eux agencés entre eux par tissage et/ou empilement, tel que dans l'exemple de la [Fig.6], un empilement de torons longitudinaux TX tissés avec des torons transversaux TY selon un repère orthogonal (X, Y, Z) défini par la direction de l'empilement Z, la direction longitudinale X et la direction transversale Y. Dans l'exemple de la [Fig.6], les torons TX, TY sont espacés les uns des autres à des fins de clarté, mais une aube 1 classiquement utilisée dans l'industrie aéronautique possède une densité de torons TX, TY comprise entre 80% et 90%, c'est-à-dire que les torons TX, TY sont agencés de manière très compactée au sein de la matrice G. Les torons TX, TY d'une telle aube 1 sont ainsi en pratique majoritairement contigus les uns aux autres.

De manière connue et en référence à la [Fig.7], la structure interne d'une telle aube 1, et plus précisément la forme et la position des torons TX, TY de l'aube 1, est déterminée dans une image 3D en niveaux de gris N de l'aube 1 obtenue par acquisition tomographique à partir d'un grand nombre de radiographies 2D obtenues en bombardant l'aube 1 de rayons X suivant différents angles. Une telle image 3D, dite « volume tomographique V » par la suite, est divisée en voxels vox s'étendant selon un repère orthogonal i, j, k. Chaque voxel vox comprend un niveau de gris N donné, correspondant au coefficient d'absorption de rayons X moyen de la zone d'aube 1 illustrée sur le voxel vox. Les voxels vox de niveaux de gris N sombres correspondent ainsi à une zone d'aube 1 comprenant majoritairement un matériau de faible coefficient d'absorption des rayons X N2, à savoir de la matrice G. Les voxels vox de niveaux de gris N clairs correspondent quant à eux à une zone d'aube 1 comprenant majoritairement un matériau de grand coefficient d'absorption N1, à savoir des torons TX, TY. A titre d'exemple, le voxel vox dans le coin supérieur gauche est un voxel de niveau de gris N sombre, car la zone d'aube 1 correspondante comprend environ 80% de matrice G (matériau de faible coefficient d'absorption N2) et 20% de torons TX, TY (matériau de grand coefficient d'absorption N1). De manière générale, le niveau de gris N de chaque voxel vox de la [Fig.7] est à interpréter à partir du pourcentage de matériau de faible coefficient d'absorption N2 et de grand coefficient d'absorption N1. A noter que les voxels vox représentés sur la [Fig.7] sont de grande taille uniquement à des fins de clarté.

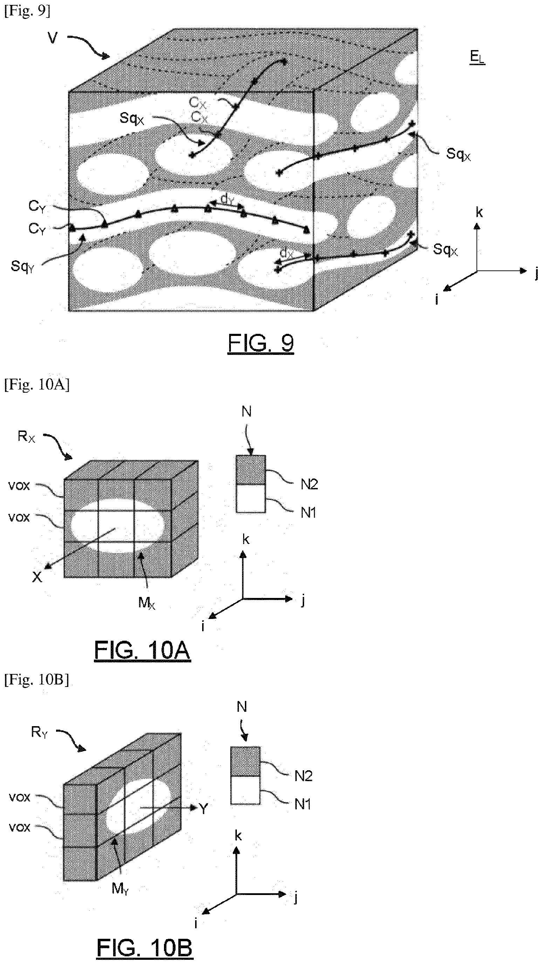

Comme illustré sur les figures 8 et 9, l'invention concerne un procédé de squelettisation des torons $T_X$, $T_Y$ d'une telle aube 1, qui est mis en oeuvre dans le volume tomographique V en déterminant une courbe directrice reflétant la position de chaque toron $T_X$, $T_Y$, connue sous le terme de « squelette $Sq_X$, $Sq_Y$ de toron $T_X$, $T_Y$ ». Le procédé de squelettisation selon l'invention s'applique de manière générale à toute pièce en matériau composite et comprend :

- une phase de détection $E_D$ de centres de section orientés $C_X$, $C_Y$ des torons $T_X$, $T_Y$ dans le volume tomographique V puis
- une phase de liaison $E_L$ de chaque centre $C_X$, $C_Y$ au centre $C_X$, $C_Y$ de même orientation le plus proche, afin de relier les centres $C_X$, $C_Y$ associés à un même toron $T_X$, $T_Y$, de manière à obtenir le squelette $Sq_X$, $Sq_Y$ des torons $T_X$, $T_Y$.

Selon l'invention et comme illustré sur les figures 10A et 10B, la phase de détection $E_D$ est mise en oeuvre au moyen d'un ou plusieurs volume(s) de référence $R_X$, $R_Y$ comprenant des voxels vox, et notamment un voxel central, qui s'étendent dans le repère orthogonal i, j, k du volume tomographique V et comprennent chacun un niveau de gris N, de manière à ce que chaque volume de référence $R_X$, $R_Y$ comporte un motif de toron centré $M_X$, $M_Y$ s'étendant suivant une direction donnée X, Y. Autrement dit, un volume de référence $R_X$, $R_Y$ est une image 3D en niveaux de gris N avec un voxel central et un motif de toron $M_X$, $M_Y$ central. On précise ici que par motif de toron, on désigne un motif d'une tranche transversale de toron inscrite dans le volume de référence. Autrement dit, le motif de toron représente un toron tronqué dans le sens de la longueur et dont la section est entièrement représentée.

En reprenant le cas de l'aube 1, dans l'exemple des figures 10A et 10B, la phase de détection $E_D$ est mise en oeuvre au moyen de deux volumes de référence $R_X$, $R_Y$, à savoir un volume de référence longitudinal $R_X$ comprenant un motif de toron longitudinal $M_X$ et un volume de référence transversal $R_Y$ comprenant un motif de toron transversal $M_Y$. Comme cela sera présenté par la suite, les volumes de référence $R_X$, $R_Y$ peuvent être plus nombreux et de natures différentes.

Selon l'invention et comme illustré sur la [Fig.8], de tels volumes de référence RX, RY permettent de mettre en oeuvre la phase de détection ED en réalisant pour chaque volume de référence RX, RY :

- une étape de détermination E1 de portions $P_X$, $P_Y$ du volume tomographique V comportant un voxel central et de dimension égale à celle du volume de référence $R_X$, $R_Y$,
- une étape de calcul E2 d'un score de corrélation $S_X$, $S_Y$ entre le volume de référence $R_X$, $R_Y$ et chaque portion $P_X$, $P_Y$ déterminée par comparaison du niveau de gris N de leurs voxels vox respectifs, ledit score de corrélation $S_X$, $S_Y$ étant associé au voxel central de chaque portion $P_X$, $P_Y$, de manière à obtenir un score de corrélation $S_X$, $S_Y$ pour chaque voxel vox du volume tomographique V formant une matrice de scores de corrélation, et
- une étape de détermination E3 des centres de section orientés $C_X$, $C_Y$ des torons $T_X$, $T_Y$ qui correspondent aux voxels centraux des portions $P_X$, $P_Y$ dont le score de corrélation $S_X$, $S_Y$ correspond à un maximum local de la matrice de scores de corrélation, leur orientation étant définie par la direction X, Y du motif de toron $M_X$, $M_Y$ du volume de référence $R_X$, $R_Y$.

Dans le cas de l'aube 1 de la [Fig.6] et comme illustré sur la [Fig.9], la phase de détection ED permet ainsi de déterminer des centres de section longitudinaux CX et des centres de section transversaux CY à partir de scores de corrélation SX, SY calculés respectivement entre le volume de référence longitudinal RX de la [Fig. 10A] et des portions longitudinales PX et entre le volume de référence transversal RY de la [Fig.10B] et des portions transversales PY.

En référence aux figures 8 et 9, la phase de liaison $E_L$ est quant à elle plus précisément mise en oeuvre par :

- une étape de calcul E4, pour chaque centre de section orienté $C_X$, $C_Y$, de la distance $d_X$, $d_Y$ le séparant du centre $C_X$, $C_Y$ de même orientation le plus proche et
- lorsque la distance $d_X$, $d_Y$ est inférieure à une distance maximale $d_{Xmax}$, $d_{Ymax}$, une étape de tracé E5 de la courbe reliant chaque centre $C_X$, $C_Y$ au centre le plus proche $C_X$, $C_Y$ de même orientation.

Autrement dit, la phase de liaison $E_L$ permet de relier les centres de section longitudinaux $C_X$ entre eux de proche en proche, de même pour les centres de section transversaux $C_Y$, et ainsi déterminer les squelettes de torons longitudinaux $Sq_X$ et les squelettes de torons transversaux $Sq_Y$, dont certains sont représentés sur la [Fig.9].

Comme illustré sur la [Fig.8], lorsque la distance dX, dY calculée est supérieure à la distance maximale dXmax, dYmax, un opérateur H vérifie par contrôle visuel la détection des centres de section CX, CY concernés dans le volume tomographique V et si besoin, annote manuellement des centres de section CX, CY non détectés ou déplace des centres de section CX, CY mal détectés.

De manière avantageuse, le procédé de squelettisation selon l'invention permet un gain en temps et en ressources et limite le risque d'erreur et d'interprétation propre à l'opérateur, en particulier au niveau de la phase de détection $E_D$ des centres de section orientés $C_X$, $C_Y$. En effet, la phase de détection $E_D$ n'est plus opérée par annotation manuelle des centres $C_X$, $C_Y$ sur la base d'une analyse visuelle suivie d'une interpolation entre les centres annotés manuellement, mais par corrélation d'images sur l'ensemble du volume tomographique V. Une telle corrélation d'images est en outre précise et fiable car elle compare un ou plusieurs volume(s) de référence orienté(s) $R_X$, $R_Y$ à des portions du volume tomographique V de plusieurs voxels vox. La corrélation d'images attribue ainsi un score de corrélation $S_X$, $S_Y$ aux voxels vox du volume tomographique V, et plus précisément aux voxels centraux des portions $P_X$, $P_Y$, qui prend en compte le voisinage des voxels vox, à savoir les voxels vox situés autour du voxel central de chaque portion $P_X$, $P_Y$. Le score de corrélation est ainsi plus pertinent car la corrélation d'images est peu sensible aux artefacts présents dans le volume tomographique V induisant des différences globales ou locales de plages de niveaux de gris N dans le volume tomographique V dues aux conditions d'acquisition. La corrélation d'images permet en outre de mettre en évidence des défauts locaux qui pouvaient être masqués par l'interpolation entre les centres annotés manuellement de l'art antérieur.

En outre, prendre en compte le voisinage d'un voxel vox présente l'avantage de bien discerner des torons $T_X$, $T_Y$ contigus et/ou compactés, ce que ne permettait pas les procédés de squelettisation de l'art antérieur utilisant la binarisation ou déterminant l'orientation locale des torons. Le procédé de squelettisation selon l'invention est donc adapté à des pièces en matériau composite de densité de torons $T_X$, $T_Y$ importante comprise entre 80% et 90%. La fiabilité et la précision du procédé de squelettisation sont en outre renforcées par l'appel à un opérateur H en cas d'espacement anormal entre les centres $C_X$, $C_Y$ afin qu'il vérifie localement la bonne détection des centres $C_X$, $C_Y$.

On décrit par la suite plus précisément chacune des étapes du procédé de squelettisation selon l'invention appliqué à la détermination des torons TX, TY de l'aube 1 de la [Fig.6] et mis en oeuvre avec le volume de référence longitudinal RX de la [Fig.10A] et le volume de référence transversal RY de la [Fig.10B]. A noter que dans l'exemple des figures 10A et 10B, les volumes de référence RX, RY sont de très faible dimension : 3 x 3 x 1 voxels dans le repère i, j, k pour le volume de référence longitudinal RX et 3 x 1 x 3 voxels pour le volume de référence transversal RY. En pratique, la dimension d'un volume de référence RX, RY est plus grande dans la réalité, et ce pour une détection plus faible et plus précise des torons TX, TY. De préférence, la dimension d'un volume de référence RX, RY est supérieure à 2 x 2 x 2 voxels. Ceci permet une corrélation plus fiable prenant en compte le voisinage du toron.

A noter également que la description qui suit pourrait être adaptée à toute pièce en matériau composite en remplaçant l'aube 1 par ladite pièce. Les volumes de référence $R_X$, $R_Y$ pourraient également être remplacés par d'autres volumes de référence en un nombre quelconque, de préférence choisis de sorte que leurs motifs de toron soient représentatifs des torons de la pièce. A titre d'exemple, les motifs de toron doivent être représentatifs de l'orientation des torons dans la pièce, à savoir la direction longitudinale X et la direction transversale Y des torons longitudinaux $T_X$ et transversaux $T_Y$ pour l'aube 1 de la [Fig.6].

En référence aux figures 11A, 11B et 11C et comme décrit précédemment, le procédé de squelettisation débute par une étape de détermination E1 de portions longitudinales $P_X$ de dimension égale au volume de référence longitudinal $R_X$ et de portions transversales $P_Y$ de dimension égale au volume de référence transversal $R_Y$. Chaque portion longitudinale $P_X$ et transversale $P_Y$ comporte un voxel central auquel sera associé le score de corrélation $S_X$, $S_Y$.

A titre d'exemples, une première portion longitudinale PX1 de premier voxel central vox1 est représentée sur la [Fig.11A], une deuxième portion longitudinale PX2 de deuxième voxel central vox2 est représentée sur la [Fig. 11B] et une troisième portion longitudinale PX3 est représentée sur la [Fig.11C]. Ces trois portions longitudinales PX1, PX2, PX3 sont de dimension 3 x 3 x 1 voxels dans le repère i, j, k de même que le volume de référence longitudinal RX de la [Fig.10A]. De la même façon, les portions transversales PY (non représentées) sont de dimension 3 x 1 x 3 voxels dans le repère i, j, k de même que le volume de référence transversal RY de la [Fig. 10B]. Dans l'exemple des figures 10A et 10B, le volume de référence longitudinal RX et le volume de référence transversal RY sont de dimensions différentes mais il va de soi que leurs dimensions pourraient être identiques auquel cas les portions longitudinales PX et les portions transversales PY seraient identiques.

De préférence, chaque voxel vox du volume tomographique V est le voxel central d'une portion longitudinale PX et d'une portion transversale PY de manière à calculer un score de corrélation longitudinal SX et un score de corrélation transversal SY en chaque voxel vox du volume tomographique V. On remarquera donc que les portions PX, PY ne sont pas distinctes les unes des autres mais comportent chacune des voxels vox communs à d'autres portions PX, PY. Par exemple, 1a première portion longitudinale PX1 ([Fig.11A]) et la deuxième portion transversale PX2 ([Fig.11B]) comprennent six voxels communs, dont le premier voxel central vox1 et le deuxième voxel central vox2. On remarquera également que pour certains voxels centraux situés aux extrémités du volume tomographique V, les portions PX, PY du volume tomographique V associées « débordent » du volume tomographique V, c'est-à-dire qu'elles comprennent des voxels vox du volume tomographique V dits « voxels réels » et des voxels fictifs.

Comme décrit précédemment et toujours en référence aux figures 11A, 11B et 11C, une fois les portions longitudinales $P_X$ et transversales $P_Y$ déterminées, le procédé de squelettisation comprend une étape de calcul E2 d'un score de corrélation longitudinal $S_X$ entre le volume de référence longitudinal $R_X$ et chaque portion longitudinale $P_X$ et d'un score de corrélation transversal $S_Y$ entre le volume de référence transversal $R_Y$ et chaque portion transversale $P_Y$. Pour une portion $P_X$, $P_Y$ du volume tomographique V donnée, un tel score de corrélation $S_X$, $S_Y$ est calculé en comparant le niveau de gris N de chaque voxel vox du volume de référence $R_X$, $R_Y$ avec celui du voxel vox correspondant de ladite portion $P_X$, $P_Y$ suivant une fonction de corrélation normalisée f. Pour un voxel vox de coordonnées a, b, c dans le repère i, j, k et pour un volume de référence R et une portion P de dimension a 1 xb 1 xc 1 voxels, la fonction de corrélation normalisée f s'exprime :

[Math.1]

$$f\left(a, b, c\right) = \frac{\sum_{i \in a1} \sum_{j \in b1} \sum_{k \in c1} R(i, j, k) \cdot P(a+i, b+j, c+k)}{\sqrt{\sum_{i \in a1} \sum_{j \in b1} \sum_{k \in c1} R^2(a+i, b+j, c+k)} \cdot \sqrt{\sum_{i \in a1} \sum_{j \in b1} \sum_{k \in c1} P^2(a+i, b+j, c+k)}}$$

A noter que pour les voxels centraux de portions $P_X$, $P_Y$ situés aux extrémités du volume tomographique V, le score de corrélation $S_X$, $S_Y$ est calculé en comparant le niveau de gris N de chaque voxel vox réel desdites portions $P_X$, $P_Y$ uniquement avec celui des voxels vox correspondant du volume de référence $R_X$, $R_Y$. Autrement dit, la corrélation est effectuée uniquement sur les voxels non fictifs dans le cas des voxels centraux situés aux extrémités du volume tomographique V.

Le score de corrélation longitudinal SX et le score de corrélation transversal SY obtenus pour chaque voxel central de portion PX, PY sont compris entre 0 et 1, la corrélation étant d'autant plus faible que le score SX, SY est proche de 0 et d'autant plus forte que le score SX, SY est proche de 1. A titre d'exemples, le calcul d'un premier score de corrélation longitudinal SX1 pour le premier voxel central vox1 est illustré sur la [Fig.11A], celui d'un deuxième score de corrélation longitudinal SX2 pour le deuxième voxel central vox2 est illustré sur la [Fig.11B] et celui d'un troisième score de corrélation longitudinal SX3 pour le troisième voxel central vox3 est illustré sur la [Fig.11C]. Dans cet exemple, la troisième portion longitudinale PX3 comportant un motif de toron centré contrairement aux première et deuxième portions longitudinales PX1, PX2, le troisième voxel central vox3 comporte donc le plus grand score de corrélation longitudinal SX.

Comme décrit précédemment, une fois les scores de corrélation longitudinal SX et transversal SY calculés pour chaque voxel vox du volume tomographique V, le procédé de squelettisation comprend une étape de détermination E3 des centres de section longitudinaux CX et transversaux CY des torons TX, TY de l'aube 1. Pour cela, les maxima locaux de la matrice des scores de corrélation SX, SX1, SX2, SX3, SY du volume tomographique V sont identifiés, notamment par transformation H-maxima Hmax, comme référencée sur la [Fig.8]. Une telle transformation H-maxima est connue en soi de l'homme du métier et une description peut être trouvée dans le chapitre 6 dans la seconde édition parue en 2003 du livre « Morphological Image Analysis : Principles and Applications » de P. Soille. En reprenant l'exemple précédent, seul le troisième score de corrélation longitudinal SX3 correspond à un maximum local parmi les trois scores de corrélation longitudinaux SX1, SX2, SX3.

Comme décrit précédemment, les voxels vox, vox1, vox2, vox3 du volume tomographique V dont le score de corrélation $S_X$, $S_{X1}$, $S_{X2}$, $S_{X3}$, $S_Y$ correspond à un maximum local forment chacun un centre $C_X$, $C_Y$. Ces différents centres $C_X$, $C_Y$ sont orientés, l'orientation d'un centre $C_X$, $C_Y$ étant définie par la direction longitudinale X ou transversale Y du motif de toron $M_X$, $M_Y$ du volume de référence $R_X$, $R_Y$ d'où est issu le score de corrélation $S_X$, $S_Y$. Toujours en reprenant l'exemple précédent, seul le troisième voxel central vox3 est désigné centre de section longitudinal $C_X$.

De préférence, la transformation H-maxima Hmax est mise en oeuvre au moyen d'une hauteur minimale de contraste suffisamment grande pour ne pas déterminer de centre $C_X$, $C_Y$ correspondant à des artefacts du volume tomographique V et suffisamment petite pour déterminer l'ensemble des centres de torons $T_X$, $T_Y$ de l'aube 1. Dans les faits, la valeur de la hauteur minimale de contraste est directement liée au choix des volumes de référence $R_X$, $R_Y$. Plus les volumes de référence $R_X$, $R_Y$ comportent un motif de toron $M_X$, $M_Y$ proche des torons $T_X$, $T_Y$ de l'aube 1 et plus la valeur de la hauteur minimale de contraste pourra être grande, et donc la corrélation discriminante. En pratique, la valeur de la hauteur minimale de contraste est choisie par retour d'expérience. A noter que la hauteur minimale de contraste peut être différente pour chaque volume de référence $R_X$, $R_Y$. Dans cet exemple, il pourrait donc y avoir une hauteur minimale de contraste longitudinale et un transversal.

Les trois étapes précédemment décrites permettent la détection ED des centres de section longitudinaux CX et transversaux CY respectivement des torons longitudinaux TX et transversaux TY de l'aube 1. Comme décrit précédemment et en référence à la [Fig.9], la détermination des squelettes SqX, SqY des torons TX, TY de l'aube 1 est ensuite réalisée par liaison EL des centres CX, CY qui ont été précédemment détectés.

En référence aux figures 8 et 9, la phase de liaison $E_L$ débute par une étape de calcul $E_4$, pour chaque centre de section longitudinal $C_X$, de la distance longitudinale $d_X$ le séparant du centre de section longitudinal $C_X$ le plus proche, et pour chaque centre de section transversal $C_Y$, de la distance transversale $d_Y$ le séparant du centre de section transversal $C_Y$ le plus proche. Une telle étape de calcul $E_4$ est mise en oeuvre par transformation de distance et permet de déterminer les centres $C_X$, $C_Y$ appartenant à un même toron $T_X$, $T_Y$ de manière simple et fiable.

Toujours en référence aux figures 8 et 9, la phase de liaison $E_L$ se poursuit par une étape de tracé $E_5$ des squelettes longitudinaux $Sq_X$ des torons longitudinaux $T_X$ de l'aube 1 en reliant les centres longitudinaux $C_X$ les plus proches les uns des autres et une étape de tracé $E_5$ des squelettes transversaux $Sq_Y$ des torons transversaux $T_Y$ de l'aube 1 en reliant les centres transversaux $C_Y$ les plus proches les uns des autres.

Toutefois, lorsque la distance longitudinale $d_X$, séparant deux centres longitudinaux $C_X$ les plus proches est supérieure à une distance maximale longitudinale $d_{Xmax}$, c'est-à-dire que les centres longitudinaux $C_X$ sont anormalement espacés, un opérateur H vérifie par contrôle visuel la détection des centres longitudinaux $C_X$ concernés dans le volume tomographique V et si besoin, annote manuellement des centres longitudinaux $C_X$ non détectés ou déplace des centres longitudinaux $C_X$ mal détectés. Une telle vérification peut également être réalisée pour des centres longitudinaux $C_X$ anormalement rapprochés. Il est réalisé de même pour les centres transversaux $C_Y$. En pratique, la distance maximale longitudinale $d_{Xmax}$ et la distance maximale transversale $d_{Ymax}$ sont choisis en fonction de la courbure physique des torons, de la résolution du volume tomographique V et de l'orientation des torons $T_X$, $T_Y$ dans le volume tomographique V. Il va de soi que la distance maximale longitudinale $d_{Xmax}$ et la distance maximale transversale $d_{Ymax}$ peuvent être identiques.

Pour résumer, les squelettes $Sq_X$, $Sq_Y$ des torons $T_X$, $T_Y$ de l'aube 1 sont déterminés par phases de détection $E_D$ puis de liaison $E_L$ de centres de section longitudinaux $C_X$ et transversaux $C_Y$ respectivement des torons longitudinaux $T_X$ et transversaux $T_Y$. Les centres longitudinaux $C_X$ sont déterminés au moyen d'un volume de référence longitudinal $R_X$ pour lequel une corrélation est effectuée avec des portions longitudinales $P_X$ du volume tomographique V. De même pour les centres transversaux $C_Y$. Les voxels centraux vox1, vox2, vox3 des portions longitudinales $P_X$ et transversales $P_Y$ avec les meilleurs scores de corrélation $S_{X1}$, $S_{X2}$, $S_{X3}$ définissent respectivement les centres longitudinaux $C_X$ et transversaux $C_Y$, qui sont ensuite reliés de proche en proche.

De manière avantageuse, la corrélation est effectuée sur la base d'un ou plusieurs volumes de référence $R_X$, $R_Y$ comprenant un motif de toron $M_X$, $M_Y$ central et non sur la base d'un ou plusieurs voxels de référence, ce qui rend la corrélation fiable et précise par rapport aux artefacts et dans le cas d'une densité de torons $T_X$, $T_Y$ importante. Par ailleurs, le choix du ou des volumes de référence $R_X$, $R_Y$ est déterminant pour la bonne détection des torons $T_X$, $T_Y$ de l'aube 1. En effet, les volumes de référence $R_X$, $R_Y$ doivent être représentatifs de l'ensemble des torons $T_X$, $T_Y$ de l'aube 1 pour permettre une détection systématique et précise. Ainsi, dans l'exemple précédemment décrit, un volume de référence longitudinal $R_X$ est utilisé pour détecter les centres longitudinaux $C_X$ de torons longitudinaux $T_X$ et un volume de référence transversal $R_Y$ est utilisé pour détecter les centres transversaux $C_Y$ de torons transversaux $T_Y$.

Pour que les volumes de référence RX, RY soient les plus représentatifs possibles de l'ensemble des torons TX, TY de l'aube 1, selon un mode de réalisation préféré de l'invention illustré sur la [Fig.13], le procédé de squelettisation comprend une étape préliminaire de détermination E0 du volume de référence longitudinal RX et du volume de référence transversal RY directement dans le volume tomographique V. Pour cela, une portion du volume tomographique V comportant un voxel central et un motif de toron MX, MY central représentatif d'un toron longitudinal TX et d'un toron transversal TY de l'aube 1 est sélectionnée par un opérateur H. La détermination du volume de référence longitudinal RX et du volume de référence transversal RY est ainsi simple et facile à mettre en oeuvre et permet d'obtenir des volumes de référence RX, RY représentatifs des torons TX, TY de l'aube 1.

De manière alternative, les volumes de référence $R_X$, $R_Y$ peuvent également être déterminés par simulation informatique de tomographies, ce qui présente un gain de temps en évitant de devoir analyser le volume tomographique V de manière préliminaire. En pr

Par ailleurs, dans la description précédente, la détection $E_D$ des centres $C_X$, $C_Y$ des torons $T_X$, $T_Y$ est effectuée uniquement au moyen de deux volumes de référence $R_X$, $R_Y$ , à savoir un volume de référence longitudinal $R_X$ représentatif de l'ensemble des torons longitudinaux $T_X$ et un volume de référence transversal $R_Y$ représentatif de l'ensemble des torons transversaux $T_Y$. En pratique, les torons longitudinaux $T_X$ et les torons transversaux $T_Y$ possèdent des sections de différentes formes, notamment elliptiques, et tailles et sont plus ou moins rapprochés de torons voisins suivant leur position dans l'aube et/ou suivant la compaction locale.

Ainsi, selon un mode de réalisation préféré de l'invention illustré sur la [Fig.14], pour que les volumes de référence RX, RY soient les plus représentatifs possibles de l'ensemble des torons TX, TY de l'aube 1, plusieurs volumes de référence longitudinaux RX, RX' et plusieurs volumes de référence transversaux RY comportant un motif de toron MX, MX', MY de sections S différentes sont utilisés pour mettre en oeuvre la détection ED. Les sections S peuvent différer les unes des autres par leur taille mais également par leur forme, de manière à être représentatives de chacun des torons TX, TY de l'aube 1.

Dans l'exemple de la [Fig.14], deux volumes de référence longitudinaux RX, RX' sont utilisés pour détecter les centres longitudinaux CX des torons longitudinaux TX de l'aube 1. Un premier volume de référence longitudinal RX comporte un motif de toron longitudinal MX de petite section elliptique S et un deuxième volume de référence longitudinal RX' comporte un motif de toron longitudinal MX' de grande section elliptique S'. L'étape de détermination E1 de portions longitudinales PX, l'étape de calcul E2 de scores de corrélation longitudinaux SX et l'étape de détermination E3 de centres longitudinaux CX sont ainsi mises en oeuvre pour le premier volume de référence longitudinal RX et pour le deuxième volume de référence longitudinal RX'. Dans cet exemple, les deux volumes de référence longitudinaux RX, RX' possèdent la même dimension donc la corrélation peut être mise en oeuvre sur les mêmes portions longitudinales PX mais il va de soi que les deux volumes de référence longitudinaux RX, RX' pourraient comporter une dimension différente. Dans tous les cas, à l'issue de l'étape de calcul E2, les voxels centraux, et notamment le troisième voxel central vox3 de la troisième portion longitudinale PX3 illustrée sur la [Fig.14], comportent deux scores de corrélation longitudinaux SX3, SX3'.

De préférence, tel qu'illustré sur les figures 14 et 15, avant la mise en oeuvre de l'étape de détermination $E_3$, la phase de détection $E_D$ comprend une étape de sélection E2' du score de corrélation longitudinal $S_{X3}$, $S_{X3}$ maximal associé à chaque voxel vox3. Pour le cas du troisième voxel central vox3, il s'agit ainsi du score de corrélation $S_{X3'}$ issu du deuxième volume de référence longitudinal $R_{X'}$ comportant un motif de toron longitudinal $M_{X'}$ de grande section elliptique S'. L'étape de détermination E3 des centres longitudinaux $C_X$ est ainsi mise en oeuvre à partir du score de corrélation maximal $S_{X3'}$ associé à chaque voxel vox3.

On décrit par la suite un autre mode de réalisation préféré de l'invention pour que les volumes de référence RX, RY soient les plus représentatifs possibles de l'ensemble des torons TX, TY de l'aube 1. Selon ce mode de réalisation illustré sur la [Fig.16], plusieurs volumes de référence longitudinaux RX, RX' et plusieurs volumes de référence transversaux RY comportent un motif de toron MX, MX", MY avec différents voisinages. Le voisinage d'un motif de toron MX, MX", MY peut différer par la présence ou non de motifs de torons voisins MV ainsi que par la forme et la position de ces derniers, de manière à ce que les volumes de référence RX, RX", RY soient représentatifs de chacun des torons TX, TY de l'aube 1, et en particulier de leurs différents degrés de compaction dans l'aube 1. Un volume de référence RX, RX', RY comprend ainsi un ou plusieurs motif(s) de toron, à savoir à minima un motif de toron centré MX, MX', MY et éventuellement un ou plusieurs motif(s) de torons voisins MV entiers ou partiels.

Dans l'exemple de la [Fig.16], deux volumes de référence longitudinaux RX, RX' sont utilisés pour détecter les centres longitudinaux CX des torons longitudinaux TX de l'aube 1. Un premier volume de référence longitudinal RX comporte un motif de toron longitudinal MX sans voisinage et un deuxième volume de référence longitudinal RX' comporte un motif de toron longitudinal MX' avec un voisinage comprenant deux motifs de torons voisins MV partiels. De même que pour le mode de réalisation précédent illustré sur la [Fig.14], l'étape de détermination E1 de portions longitudinales PX, l'étape de calcul E2 de scores de corrélation longitudinaux SX et l'étape de détermination E3 de centres longitudinaux CX sont ainsi mises en oeuvre pour le premier volume de référence longitudinal RX et pour le deuxième volume de référence longitudinal RX". De même que pour le mode de réalisation précédent illustré sur la [Fig.14], les deux volumes de référence longitudinaux RX, RX" possèdent la même dimension donc la corrélation peut être mise en oeuvre sur les mêmes portions longitudinales PX mais il va de soi que les deux volumes de référence longitudinaux RX, RX' pourraient comporter une dimension différente. De préférence, comme décrit précédemment et illustré sur les figures 15 et 16, une étape de sélection E2' du score de corrélation SX3" maximal est mise en oeuvre avant l'étape de détermination E3 des centres longitudinaux CX.

De manière générale, les modes de réalisation présentés sur les figures 10A, 10B, 14 et 16 sont combinables entre eux. Autrement dit, en pratique, la phase de détection $E_D$ des centres de section orientés $C_X$, $C_Y$ des torons $T_X$, $T_Y$ de l'aube 1, et plus généralement de toute pièce en matériau composite, est mise en oeuvre avec plusieurs volumes de référence $R_X$, $R_{X'}$, $R_{X''}$, $R_Y$ comprenant un motif de toron $M_X$, $M_{X'}$, $M_{X''}$, $M_Y$ selon différentes directions X, Y, de différentes sections S et de différents voisinages. De manière avantageuse, le procédé de squelettisation selon l'invention permet de détecter et de relier chaque centre de toron de manière indépendante contrairement à l'art antérieur. En effet, chaque centre de toron est déterminé à partir d'un motif de toron sans faire appel aux autres centres de torons détectés. De plus, l'étape de liaison est exempte d'interpolation et/ou de prédiction. En effet, un centre est relié à un autre uniquement en fonction de la distance des centres voisins de même orientation uniquement. Il n'est pas fait appel aux segments de liaison de centres déterminés lors d'étapes de liaison précédentes.

Selon un mode de réalisation alternatif de l'invention illustré sur la [Fig.16], le procédé de squelettisation comprend de manière préliminaire une étape de filtrage E0' du volume tomographique V, par exemple au moyen d'un filtre de Gabor G, afin de mettre en exergue les motifs de torons dans le volume tomographique V. Une telle étape de filtrage E0' est exempte de binarisation comme dans l'art antérieur, qui ne permet pas de distinguer des torons contigus les uns des autres.

L'invention concerne également un système de squelettisation permettant la mise en oeuvre du procédé de squelettisation précédemment décrit. En référence à la [Fig.8], dans l'exemple de l'aube 1, un tel système de squelettisation comprend un organe de calcul 2, tel qu'un ordinateur, ainsi qu'une base de données 3. La base de données 3 est configurée pour stocker les volumes de référence RX, RX', RX", RY acquis par simulation ou directement sur le volume tomographique V, ainsi que la hauteur de contraste minimale pour la mise en oeuvre de la transformation H-maxima Hmax et la distance maximale dXmax, dYmax. Pour chaque volume de référence RX, RX', RX", RY, l'organe de calcul 2 est quant à lui configuré pour :

- déterminer des portions $P_X$, $P_Y$, $P_{X1}$, $P_{X2}$, $P_{X3}$ du volume tomographique V de dimension égale à celle du volume de référence $R_X$, $R_{X'}$, $R_{X"}$, $R_Y$,
- calculer un score de corrélation $S_X$, $S_Y$, $S_{X1}$, $S_{X2}$, $S_{X3}$ entre le volume de référence $R_X$, $R_{X'}$, $R_{X"}$, $R_Y$ et chaque portion $P_X$, $P_Y$, $P_{X1}$, $P_{X2}$, $P_{X3}$ du volume tomographique V par comparaison du niveau de gris N de leurs voxels vox respectifs, ledit score de corrélation $S_X$, $S_Y$, $S_{X1}$, $S_{X2}$, $S_{X3}$ étant associé au voxel central vox1, vox2, vox3 de chaque portion $P_X$, $P_Y$, $P_{X1}$, $P_{X2}$, $P_{X3}$, de manière à obtenir un score de corrélation $S_X$, $S_Y$, $S_{X1}$, $S_{X2}$, $S_{X3}$ pour chaque voxel vox du volume tomographique V formant une matrice de scores de corrélation, et
- déterminer les centres de section orientés $C_X$, $C_Y$ des torons $T_X$, $T_Y$ de l'aube 1, lesdits centres $C_X$, $C_Y$ correspondant aux voxels centraux vox1, vox2, vox3 des portions $P_X$, $P_Y$, $P_{X1}$, $P_{X2}$, $P_{X3}$ dont le score de corrélation $S_X$, $S_Y$, $S_{X1}$, $S_{X2}$, $S_{X3}$ correspond à un maximum local de la matrice de scores de corrélation, l'orientation desdits centres $C_X$, $C_Y$ étant définie par la direction X, Y du motif de toron $M_X$, $M_Y$, $M_{X'}$, $M_{X"}$ du volume de référence $R_X$, $R_{X'}$, $R_{X"}$, $R_Y$.

L'organe de calcul 2 est de plus configuré pour relier chaque centre $C_X$, $C_Y$ au centre $C_X$, $C_Y$ de même orientation le plus proche, afin de relier les centres $C_X$, $C_Y$ associés à un même toron $T_X$, $T_Y$, de manière à obtenir le squelette $Sq_X$, $Sq_Y$ des torons $T_X$, $T_Y$ de l'aube 1.

Selon un aspect, l'organe de calcul 2 est configuré pour déterminer les volumes de référence $R_X$, $R_{X'}$, $R_{X"}$, $R_Y$ par simulation tomographique.

Selon un autre aspect, l'organe de calcul 2 est configuré pour filtrer le volume de tomographique V, par exemple par un filtre de Gabor G.

Selon un autre aspect, dans le cas d'une pluralité de volumes de référence $R_X$, $R_{X'}$, $R_{X"}$, $R_Y$, l'organe de calcul 2 est configuré pour sélectionner le score de corrélation maximal associé à chaque voxel du volume tomographique V.

Il va de soi que le système de squelettisation pourrait comprendre une pluralité d'organes de calcul 2 configurés chacun pour effectuer une partie des tâches énumérées ci-dessus, ainsi qu'une pluralité de bases de données 3, intégrées ou non à un organe de calcul 2.

**Revendications**

1. Procédé de squelettisation des torons ($T_X$, $T_Y$) d'une pièce en matériau composite dans une image 3D (V) de ladite pièce, ladite image (V) comprenant une pluralité de voxels (vox, vox1, vox2, vox3) s'étendant dans un repère orthogonal (i, j, k) et comprenant chacun un niveau de gris (N), ledit procédé comprenant :

   - une phase de détection ($E_D$) d'une pluralité de centres de section orientés ($C_X$, $C_Y$) des torons ($T_X$, $T_Y$) de la pièce dans l'image (V) et
   - une phase de liaison ($E_L$) de chaque centre ($C_X$, $C_Y$) au centre ($C_X$, $C_Y$) de même orientation le plus proche, afin de relier les centres ($C_X$, $C_Y$) associés à un même toron ($T_X$, $T_Y$), de manière à obtenir le squelette ($Sq_X$, $Sq_Y$) des torons ($T_X$, $T_Y$) de ladite pièce,
   - dans ledit procédé la phase de détection ($E_D$) est mise en oeuvre au moyen d'au moins un volume de référence ($R_X$, $R_{X'}$, $R_{X"}$, $R_Y$) comprenant une pluralité de voxels (vox), lesdits voxels (vox) s'étendant dans le repère orthogonal (i, j, k) et comprenant chacun un niveau de gris (N) de manière à ce que le volume de référence ($R_X$, $R_{X'}$, $R_{X"}$, $R_Y$) comporte un motif de toron centré ($M_X$, $M_{X'}$, $M_{X"}$, $M_Y$) s'étendant suivant une direction donnée (X, Y), ladite phase de détection ($E_D$) comprenant, pour chaque volume de référence ($R_X$, $R_{X'}$, $R_{X"}$, $R_Y$) :

     - une étape de détermination (E1) de portions ($P_X$, $P_Y$, $P_{X1}$, $P_{X2}$, $P_{X3}$) de l'image (V) comportant un voxel central (vox1, vox2, vox3) et de dimension égale à celle du volume de référence ($R_X$, $R_{X'}$, $R_{X"}$, $R_Y$),

• une étape de calcul (E2) d'un score de corrélation ($S_X$, $S_Y$, $S_{X1}$, $S_{X2}$, $S_{X3}$, $S_{X3'}$, $S_{X3''}$) entre le volume de référence ($R_X$, $R_{X'}$, $R_{X''}$, $R_Y$) et chaque portion ($P_X$, $P_Y$, $P_{X1}$, $P_{X2}$, $P_{X3}$) de l'image (V) par comparaison du niveau de gris (N) de leurs voxels (vox) respectifs, ledit score de corrélation ($S_X$, $S_Y$, $S_{X1}$, $S_{X2}$, $S_{X3}$, $S_{X3'}$, $S_{X3''}$) étant associé au voxel central (vox1, vox2, vox3) de chaque portion ($P_X$, $P_Y$, $P_{X1}$, $P_{X2}$, $P_{X3}$), de manière à obtenir un score de corrélation ($S_X$, $S_Y$, $S_{X1}$, $S_{X2}$, $S_{X3}$, $S_{X3'}$, $S_{X3''}$) pour chaque voxel (vox) de l'image (V) formant une matrice de scores de corrélation, et

• une étape de détermination (E3) des centres de section orientés ($C_X$, $C_Y$) des torons ($T_X$, $T_Y$) de la pièce, lesdits centres ($C_X$, $C_Y$) correspondant aux voxels (vox) de l'image (V) dont le score de corrélation ($S_X$, $S_Y$, $S_{X1}$, $S_{X2}$, $S_{X3}$, $S_{X3'}$, $S_{X3''}$) correspond à un maximum local de la matrice de scores de corrélation, l'orientation desdits centres ($C_X$, $C_Y$) étant définie par la direction (X, Y) du motif de toron ($M_X$, $M_Y$) du volume de référence ($R_X$, $R_{X'}$, $R_{X''}$, $R_Y$).

2. Procédé de squelettisation selon la revendication 1, des torons ($T_X$, $T_Y$) d'une pièce en matériau composite comprenant une densité de torons ($T_X$, $T_Y$) supérieure à 50%, de préférence comprise entre 80% et 90%.

3. Procédé de squelettisation selon l'une des revendications 1 et 2, dans lequel la phase de détection ($E_D$) est mise en oeuvre au moyen d'une pluralité de volumes de référence ($R_X$, $R_{X'}$, $R_{X''}$, $R_Y$), les motifs de toron ($M_X$, $M_{X'}$, $M_{X''}$, $M_Y$) desdits volumes de référence ($R_X$, $R_{X'}$, $R_{X''}$, $R_Y$) s'étendant suivant différentes directions données (X, Y).

4. Procédé de squelettisation selon l'une des revendications 1 à 3, dans lequel la phase de détection ($E_D$) est mise en oeuvre au moyen d'une pluralité de volumes de référence ($R_X$, $R_{X'}$, $R_{X''}$, $R_Y$), les motifs de toron ($M_X$, $M_{X'}$, $M_{X''}$, $M_Y$) desdits volumes de référence ($R_X$, $R_{X'}$, $R_{X''}$, $R_Y$) comportant différentes sections (S, S').

5. Procédé de squelettisation selon l'une des revendications 1 à 4, dans lequel au moins un volume de référence ($R_X$, $R_{X'}$, $R_{X''}$, $R_Y$) comprend autour du motif de toron ($M_X$, $M_{X'}$, $M_{X''}$, $M_Y$) un voisinage comprenant au moins un motif de toron voisin ($M_V$).

6. Procédé de squelettisation selon la revendication 5 prise seule ou en combinaison avec l'une des revendications 1 à 4, dans lequel la phase de détection ($E_D$) est mise en oeuvre au moyen d'une pluralité de volumes de référence ($R_X$, $R_{X'}$, $R_{X''}$, $R_Y$), les motifs de toron ($M_X$, $M_{X'}$, $M_{X''}$, $M_Y$) desdits volumes de référence ($R_X$, $R_{X'}$, $R_{X''}$, $R_Y$) comportant des voisinages différents.

7. Procédé de squelettisation selon l'une des revendications 1 à 6, dans lequel, lorsque la phase de détection ($E_D$) est mise en oeuvre au moyen d'une pluralité de volumes de référence ($R_X$, $R_{X'}$, $R_{X''}$, $R_Y$), le procédé comprend une étape de sélection (E2') du score de corrélation ($S_X$, $S_Y$, $S_{X1}$, $S_{X2}$, $S_{X3}$, $S_{X3'}$, $S_{X3''}$) maximal associé à chaque voxel (vox, vox1, vox2, vox3) de l'image 3D (V) de la pièce.

8. Procédé de squelettisation selon l'une des revendications 1 à 7, comprenant une étape préliminaire de détermination (E0) d'au moins un volume de référence ($R_X$, $R_{X'}$, $R_{X''}$, $R_Y$) par sélection d'une portion ou d'une moyenne de portions de l'image (V) comprenant un voxel central (vox1, vox2, vox3) et comportant un motif de toron centré ($M_X$, $M_{X'}$, $M_{X''}$, $M_Y$) s'étendant suivant une direction donnée (X, Y).

9. Procédé de squelettisation selon l'une des revendications 1 à 8, dans lequel la phase de liaison ($E_L$) comprend :

• une étape de calcul (E4), pour chaque centre de section orienté ($C_X$, $C_Y$), de la distance ($d_X$, $d_Y$) le séparant du centre ($C_X$, $C_Y$) de même orientation le plus proche et

• lorsque la distance ($d_X$, $d_Y$) est inférieure à une distance maximale ($d_{Xmax}$, $d_{Ymax}$), une étape de tracé (E5) de la courbe reliant chaque centre ($C_X$, $C_Y$) au centre ($C_X$, $C_Y$) de même orientation le plus proche.

10. Système de squelettisation pour la mise en oeuvre du procédé de squelettisation des torons ($T_X$, $T_Y$) d'une pièce en matériau composite dans une image 3D (V) de ladite pièce selon l'une des revendications 1 à 9, ledit système de squelettisation comprenant au moins une base de données (3) comprenant au moins un volume de référence ($R_X$, $R_{X'}$, $R_{X''}$, $R_Y$) comportant un motif de toron centré ($M_X$, $M_{X'}$, $M_{X''}$, $M_Y$) s'étendant suivant une direction donnée (X, Y), ledit système de squelettisation comprenant au moins un organe de calcul (2) qui, pour chaque volume de référence ($R_X$, $R_{X'}$, $R_{X''}$, $R_Y$), est configuré pour :

• déterminer des portions ($P_X$, $P_Y$, $P_{X1}$, $P_{X2}$, $P_{X3}$) de l'image (V) de dimension égale à celle du volume de référence ($R_X$, $R_{X'}$, $R_{X''}$, $R_Y$),

- calculer un score de corrélation ($S_X$, $S_Y$, $S_{X1}$, $S_{X2}$, $S_{X3}$, $S_{X3'}$, $S_{X3''}$ ) entre le volume de référence ($R_X$, $R_{X'}$, $R_{X''}$, $R_Y$) et chaque portion ($P_X$, $P_Y$, $P_{X1}$, $P_{X2}$, $P_{X3}$) de l'image (V) par comparaison du niveau de gris (N) de leurs voxels (vox) respectifs, ledit score de corrélation ($S_X$, $S_Y$, $S_{X1}$, $S_{X2}$, $S_{X3}$, $S_{X3'}$, $S_{X3''}$) étant associé au voxel central (vox1, vox2, vox3) de chaque portion ($P_X$, $P_Y$, $P_{X1}$, $P_{X2}$, $P_{X3}$), de manière à obtenir un score de corrélation ($S_X$, $S_Y$, $S_{X1}$, $S_{X2}$, $S_{X3}$, $S_{X3'}$, $S_{X3''}$) pour chaque voxel (vox) de l'image (V) formant une matrice de scores de corrélation, et

- déterminer les centres de section orientés ($C_X$, $C_Y$) des torons ($T_X$, $T_Y$) de la pièce, lesdits centres ($C_X$, $C_Y$) correspondant aux voxels centraux (vox1, vox2, vox3) des portions ($P_X$, $P_Y$, $P_{X1}$, $P_{X2}$, $P_{X3}$) dont le score de corrélation ($S_X$, $S_Y$, $S_{X1}$, $S_{X2}$, $S_{X3}$, $S_{X3'}$, $S_{X3''}$) correspond à un maximum local de la matrice de scores de corrélation, l'orientation desdits centres ($C_X$, $C_Y$) étant définie par la direction (X, Y) du motif de toron ($M_X$, $M_{X'}$, $M_{X''}$, $M_Y$) du volume de référence ($R_X$, $R_{X'}$, $R_{X''}$, $R_Y$),

- ledit organe de calcul (2) étant de plus configuré pour relier chaque centre ($C_X$, $C_Y$) au centre ($C_X$, $C_Y$) de même orientation le plus proche, afin de relier les centres ($C_X$, $C_Y$) associés à un même toron ($T_X$, $T_Y$), de manière à obtenir le squelette ($Sq_X$, $Sq_Y$) des torons ($T_X$, $T_Y$) de la pièce.

## Patentansprüche

1. Verfahren zur Skelettierung der Stränge ($T_X$, $T_Y$) eines Verbundwerkstoffteils in einem 3D-Bild (V) des Teils, wobei das Bild (V) eine Vielzahl von Voxeln (vox, vox1, vox2, vox3) umfasst, die sich in einem orthogonalen Bezugssystem (i, j, k) erstrecken und jeweils eine Graustufe (N) umfassen, wobei das Verfahren umfasst:

   - eine Detektionsphase ($E_D$) einer Vielzahl ausgerichteter Querschnittzentren ($C_x$, $C_Y$) der Stränge ($T_x$, $T_Y$) des Teils in dem Bild (V) und
   - eine Verbindungsphase ($E_L$) jedes Zentrums ($C_x$, $C_Y$) mit dem nächsten Zentrum ($C_x$, $C_Y$) gleicher Ausrichtung, um die demselben Strang ($T_x$, $T_Y$) zugeordneten Zentren ($C_x$, $C_Y$) derart zu verbinden, dass man das Skelett ($Sq_x$, $Sq_Y$) der Stränge ($T_x$, $T_Y$) des Teils erhält,

   wobei in dem Verfahren die Detektionsphase ($E_D$) mittels mindestens eines Referenzvolumens ($R_x$, $R_x$, $R_{X''}$, $R_Y$) durchgeführt wird, das eine Vielzahl von Voxeln (vox) umfasst, wobei sich die Voxel (vox) in dem orthogonalen Bezugssystem (i, j, k) erstrecken und jeweils eine Graustufe (N) derart umfassen, dass das Referenzvolumen ($R_X$, $R_{X'}$, $R_{X''}$, $R_Y$) ein zentriertes Strangmotiv ($M_x$, $M_{X'}$, $M_{X''}$, $M_Y$) aufweist, das sich in einer gegebenen Richtung (X, Y) erstreckt, wobei die Detektionsphase ($E_D$) für jedes Referenzvolumen ($R_X$, $R_{X'}$, $R_{X''}$, $R_Y$) umfasst:

   - einen Schritt des Bestimmens (E1) von Abschnitten ($P_X$, $P_Y$, $P_{X1}$, $P_{X2}$, $P_{X3}$) des Bildes (V), die ein zentrales Voxel (vox1, vox2, vox3) und in einer Größe aufweisen, die gleich der des Referenzvolumens ($R_x$, $R_x$, $R_{X''}$, $R_Y$) ist,
   - einen Schritt des Berechnens (E2) eines Korrelationsscores ($S_x$, $S_Y$, $S_{X1}$, $S_{X2}$, $S_{X3}$, $S_{X3'}$, $S_{X3''}$) zwischen dem Referenzvolumen ($R_X$, $R_{X'}$, $R_{X''}$, $R_Y$) und jedem Abschnitt ($P_x$, $P_Y$, $P_{X1}$, $P_{X2}$, $P_{X3}$) des Bildes (V) durch Vergleichen der Graustufe (N) ihrer jeweiligen Voxel (vox), wobei der Korrelationsscore ($S_x$, $S_Y$, $S_{X1}$, $S_{X2}$, $S_{X3}$, $S_{X3'}$, $S_{X3''}$) dem zentralen Voxel (vox1, vox2, vox3) jedes Abschnitts ($P_x$, $P_Y$, $P_{X1}$, $P_{X2}$, $P_{X3}$) derart zugeordnet ist, dass man einen Korrelationsscore ($S_x$, $S_Y$, $S_{X1}$, $S_{X2}$, $S_{X3}$, $S_{X3'}$, $S_{X3''}$) für jedes Voxel (vox) des Bildes (V) erhält, so dass eine Korrelationsscorematrix gebildet wird, und
   - einen Schritt des Bestimmens (E3) der ausgerichteten Querschnittzentren ($C_x$, $C_Y$) der Stränge ($T_x$, $T_Y$) des Teils, wobei die Zentren ($C_x$, $C_Y$) den Voxeln (vox) des Bildes (V) entsprechen, deren Korrelationsscore ($S_x$, $S_Y$, $S_{X1}$, $S_{X2}$, $S_{X3}$, $S_{X3'}$, $S_{X3''}$) einem lokalen Maximum der Korrelationsscorematrix entspricht, wobei die Ausrichtung der Zentren ($C_x$, $C_Y$) durch die Richtung (X, Y) des Strangmotivs ($M_x$, $M_Y$) des Referenzvolumens ($R_x$, $R_x$, $R_{X''}$, $R_Y$) festgelegt ist.

2. Verfahren zur Skelettierung nach Anspruch 1 der Stränge ($T_x$, $T_Y$) eines Verbundwerkstoffteils, umfassend eine Dichte der Stränge ($T_x$, $T_Y$) von über 50 %, vorzugsweise zwischen 80 % und 90 %.

3. Skelettierungsverfahren nach einem der Ansprüche 1 und 2, wobei la Detektionsphase ($E_D$) mittels einer Vielzahl von Referenzvolumen ($R_x$, $R_{X'}$, $R_{X''}$, $R_Y$) durchgeführt wird, wobei sich die Strangmotive ($M_x$, $M_{X'}$, $M_{X''}$, $M_Y$) der Referenzvolumen ($R_x$, $R_{X'}$, $R_{X''}$, $R_Y$) in verschiedenen gegebenen Richtungen (X, Y) erstrecken.

4. Skelettierungsverfahren nach einem der Ansprüche 1 bis 3, wobei die Detektionsphase ($E_D$) mittels einer Vielzahl von Referenzvolumen ($R_x$, $R_{X'}$, $R_{X''}$, $R_Y$) durchgeführt wird, wobei die Strangmotive ($M_x$, $M_{X'}$, $M_{X''}$, $M_Y$) der Referenzvolumen ($R_X$, $R_{X'}$, $R_{X''}$, $R_Y$) verschiedene Querschnitte (S, S') aufweisen.

**5.** Skelettierungsverfahren nach einem der Ansprüche 1 bis 4, wobei mindestens ein Referenzvolumen (Rx, $R_{X'}$, $R_{X''}$, $R_Y$) um das Strangmotiv (Mx, $M_{X'}$, $M_{X''}$, $M_Y$) eine Nachbarschaft umfasst, die mindestens ein benachbartes Strangmotiv (Mv) umfasst.

**6.** Skelettierungsverfahren nach Anspruch 5, allein oder in Kombination mit einem der Ansprüche 1 bis 4 herangezogen, wobei die Detektionsphase ($E_D$) mittels einer Vielzahl von Referenzvolumen (Rx, $R_{X'}$, $R_{X''}$, $R_Y$) durchgeführt wird, wobei die Strangmotive (Mx, $M_{X'}$, $M_{X''}$, $M_Y$) der Referenzvolumen ($R_X$, $R_{X'}$, $R_{X''}$, $R_Y$) unterschiedliche Nachbarschaften aufweisen.

**7.** Skelettierungsverfahren nach einem der Ansprüche 1 bis 6, wobei, wenn die Detektionsphase ($E_D$) mittels einer Vielzahl von Referenzvolumen (Rx, $R_{X'}$, $R_{X''}$, $R_Y$) durchgeführt wird, das Verfahren einen Auswahlschritt (E2') des maximalen Korrelationsscores (Sx, $S_Y$, $S_{X1}$, $S_{X2}$, $S_{X3}$, $S_{X3'}$, $S_{X3''}$) umfasst, der jedem Voxel (vox, vox1, vox2, vox3) des 3D-Bildes (V) des Teils zugeordnet ist.

**8.** Skelettierungsverfahren nach einem der Ansprüche 1 bis 7, umfassend einen vorherigen Bestimmungsschritt (E0) mindestens eines Referenzvolumens ($R_X$, $R_{X'}$, $R_{X''}$, $R_Y$) durch Auswahl eines Abschnitts oder eines Mittels von Abschnitten des Bildes (V) mit einem zentralen Voxel (vox1, vox2, vox3) und einem zentrierten Strangmotiv (Mx, $M_{X'}$, $M_{X''}$, $M_Y$), das sich in einer gegebenen Richtung (X, Y) erstreckt.

**9.** Skelettierungsverfahren nach einem der Ansprüche 1 bis 8, wobei die Verbindungsphase ($E_L$) umfasst:

• einen Berechnungsschritt (E4), für jedes ausgerichtete Querschnittzentrum (Cx, $C_Y$), des Abstands ($d_X$, $d_Y$), der es vom nächsten Zentrum (Cx, $C_Y$) mit derselben Ausrichtung trennt und
• wenn der Abstand (dx, $d_Y$) kleiner als ein maximaler Abstand ($d_{Xmax}$, $d_{Ymax}$) ist, einen Schritt der Verlaufszeichnung (E5) der Kurve, die jedes Zentrum (Cx, $C_Y$) mit dem nächsten Zentrum (Cx, $C_Y$) mit derselben Ausrichtung verbindet.

**10.** Skelettierungssystem für die Durchführung des Verfahrens zur Skelettierung der Stränge (Tx, $T_Y$) eines Verbundwerkstoffteils in einem 3D-Bild (V) des Teils nach einem der Ansprüche 1 bis 9, wobei das Skelettierungssystem mindestens eine Datenbank (3) umfasst, die mindestens ein Referenzvolumen (Rx, $R_{X'}$, $R_{X''}$, $R_Y$) umfasst, das ein zentriertes Strangmotiv (Mx, $M_{X'}$, $M_{X''}$, $M_Y$) umfasst, das sich in einer gegebenen Richtung (X, Y) erstreckt, wobei das Skelettierungssystem mindestens ein Berechnungsorgan (2) umfasst, das für jedes Referenzvolumen (Rx, $R_{X'}$, $R_{X''}$, $R_Y$) ausgelegt ist, um:

• Abschnitte (Px, $P_Y$, $P_{X1}$, $P_{X2}$, $P_{X3}$) des Bildes (V) mit einer Abmessung zu bestimmen, die gleich der des Referenzvolumens (Rx, Rx, $R_{X''}$, $R_Y$) ist,
• einen Korrelationsscore (Sx, $S_Y$, $S_{X1}$, $S_{X2}$, $S_{X3}$, $S_{X3'}$, $S_{X3''}$) zwischen dem Referenzvolumen ($R_X$, $R_{X'}$, $R_{X''}$, $R_Y$) und jedem Abschnitt ($P_X$, $P_Y$, $P_{X1}$, $P_{X2}$, $P_{X3}$) des Bildes (V) durch Vergleichen der Graustufe (N) ihrer jeweiligen Voxel (vox) zu berechnen, wobei der Korrelationsscore (Sx, $S_Y$, $S_{X1}$, $S_{X2}$, $S_{X3}$, $S_{X3'}$, $S_{X3''}$) dem zentralen Voxel (vox1, vox2, vox3) jedes Abschnitts ($P_X$, $P_Y$, $P_{X1}$, $P_{X2}$, $P_{X3}$) derart zugeordnet ist, dass man einen Korrelationsscore (Sx, $S_Y$, $S_{X1}$, $S_{X2}$, $S_{X3}$, $S_{X3'}$, $S_{X3''}$) für jedes Voxel (vox) des Bildes (V) erhält, so dass eine Korrelationsscorematrix gebildet wird, und
• die ausgerichteten Querschnittzentren (Cx, $C_Y$) der Stränge (Tx, $T_Y$) des Teils zu bestimmen, wobei die Zentren (Cx, $C_Y$) den zentralen Voxeln (vox1, vox2, vox3) der Abschnitte (Px, $P_Y$, $P_{X1}$, $P_{X2}$, $P_{X3}$) entsprechen, deren Korrelationsscore (Sx, $S_Y$, $S_{X1}$, $S_{X2}$, $S_{X3}$, $S_{X3'}$, $S_{X3''}$) einem lokalen Maximum der Korrelationsscorematrix entspricht, wobei die Ausrichtung der Zentren (Cx, $C_Y$) durch die Richtung (X, Y) des Strangmotivs (Mx, $M_{X'}$, $M_{X''}$, $M_Y$) des Referenzvolumens (Rx, $R_{X'}$, $R_{X''}$, $R_Y$) festgelegt ist,
• wobei das Berechnungsorgan (2) weiterhin dazu ausgelegt ist, jedes Zentrum (Cx, $C_Y$) mit dem nächsten Zentrum (Cx, $C_Y$) derselben Ausrichtung zu verbinden, um die Zentren (Cx, $C_Y$), die demselben Strang (Tx, $T_Y$) zugeordnet sind, derart zu verbinden, dass man das Skelett (Sqx, $Sq_Y$) der Stränge (Tx, $T_Y$) des Teils erhält.

**Claims**

**1.** Method for skeletonizing the strands ($T_X$, $T_Y$) of a composite material part in a 3D image (V) of said part, said image (V) comprising a plurality of voxels (vox, vox1, vox2, vox3) extending in an orthogonal coordinates system (i, j, k) and each comprising a gray level (N), said method comprising:

• a phase of detecting ($E_D$) a plurality of oriented section centers (Cx, $C_Y$) of the strands ($T_X$, $T_Y$) of the part in the image (V), and

• a phase of linking ($E_L$) each center (Cx, $C_Y$) to the closest center (Cx, $C_Y$) of same orientation, in order to link the centers (Cx, $C_Y$) associated with a same strand (Tx, $T_Y$), so as to obtain the skeleton (Sqx, $Sq_Y$) of the strands (Tx, $T_Y$) of said part,

• in said method, the detection phase ($E_D$) is implemented by means of at least one reference volume (Rx, $R_{X'}$, $R_{X''}$, $R_Y$) comprising a plurality of voxels (vox), said voxels (vox) extending in the orthogonal coordinates system (i, j, k) and each comprising a gray level (N) in such a way that the reference volume (Rx, $R_{X'}$, $R_{X''}$, $R_Y$) comprises a centered strand pattern (Mx, $M_{X'}$, $M_{X''}$, $M_Y$) extending along a given direction (X, Y), said detection phase ($E_D$) comprising, for each reference volume (Rx, $R_{X'}$, $R_{X''}$, $R_Y$):

• a step of determining (E1) portions (Px, $P_Y$, $P_{X1}$, $P_{X2}$, $P_{X3}$) of the image (V) comprising a central voxel (vox1, vox2, vox3) and of dimension equal to that of the reference volume ($R_X$, $R_{X'}$, $R_{X''}$, $R_Y$);

• a step of calculating (E2) a correlation score ($S_X$, $S_Y$, $S_{X1}$, $S_{X2}$, $S_{X3}$, $S_{X3'}$, $S_{X3''}$) between the reference volume (Rx, $R_{X'}$, $R_{X''}$, $R_Y$) and each portion (Px, $P_Y$, $P_{X1}$, $P_{X2}$, $P_{X3}$) of the image (V) by comparison of the gray level (N) of their respective voxels (vox), said correlation score (Sx, $S_Y$, $S_{X1}$, $S_{X2}$, $S_{X3}$, $S_{X3'}$, $S_{X3''}$) being associated with the central voxel (vox1, vox2, vox3) of each portion (Px, $P_Y$, $P_{X1}$, $P_{X2}$, $P_{X3}$) so as to obtain a correlation score (Sx, $S_Y$, $S_{X1}$, $S_{X2}$, $S_{X3}$, $S_{X3'}$, $S_{X3''}$) for each voxel (vox) of the image (V) forming a matrix of correlation scores, and

• a step of determining (E3) oriented section centers (Cx, $C_Y$) of the strands (Tx, $T_Y$) of the part, said centers (Cx, $C_Y$) corresponding to the voxels (vox) of the image (V) of which the correlation score (Sx, $S_Y$, $S_{X1}$, $S_{X2}$, $S_{X3}$, $S_{X3'}$, $S_{X3''}$) corresponds to a local maximum of the matrix of correlation scores, the orientation of said centers (Cx, $C_Y$) being defined by the direction (X, Y) of the strand pattern ($M_X$, $M_Y$) of the reference volume ($R_X$, $R_{X'}$, $R_{X''}$, $R_Y$).

2. Method for skeletonizing, according to claim 1, the strands (Tx, $T_Y$) of a composite material part comprising a density of strands ($T_X$, $T_Y$) greater than 50%, preferably comprised between 80% and 90%.

3. Skeletonization method according to one of claims 1 and 2, wherein the detection phase ($E_D$) is implemented by means a plurality of reference volumes ($R_X$, $R_{X'}$, $R_{X''}$, $R_Y$), the strand patterns (Mx, $M_{X'}$, $M_{X''}$, $M_Y$) of said reference volumes (Rx, $R_{X'}$, $R_{X''}$, $R_Y$), extending along different given directions (X, Y).

4. Skeletonization method according to one of claims 1 to 3, wherein the detection phase ($E_D$) is implemented by means of a plurality of reference volumes ($R_X$, $R_{X'}$, $R_{X''}$, $R_Y$), the strand patterns (Mx, $M_{X'}$, $M_{X''}$, $M_Y$) of said reference volumes (Rx, $R_{X'}$, $R_{X''}$, $R_Y$), comprising different sections (S, S').

5. Skeletonization method according to one of claims 1 to 4, wherein at least one reference volume (Rx, $R_{X'}$, $R_{X''}$, $R_Y$) comprises around the strand pattern (Mx, $M_{X'}$, $M_{X''}$, $M_Y$) a neighborhood comprising at least one neighboring strand pattern (Mv).

6. Skeletonization method according to claim 5 taken alone or in combination with one of claims 1 to 4, wherein the detection phase ($E_D$) is implemented by means of a plurality of reference volumes ($R_X$, $R_{X'}$, $R_{X''}$, $R_Y$), the strand patterns (Mx, $M_{X'}$, $M_{X''}$, $M_Y$) of said reference volumes (Rx, $R_{X'}$, $R_{X''}$, $R_Y$) comprising different neighborhoods.

7. Skeletonization method according to one of claims 1 to 6, wherein when the detection phase ($E_D$) is implemented by means of a plurality of reference volumes (Rx, $R_{X'}$, $R_{X''}$, $R_Y$), the method comprises a step of selecting (E2') the maximum correlation score (Sx, $S_Y$, $S_{X1}$, $S_{X2}$, $S_{X3}$, $S_{X3'}$, $S_{X3''}$) associated with each voxel (vox, vox1, vox2, vox3) of the 3D image (V) of the part.

8. Skeletonization method according to one of claims 1 to 7, comprising a preliminary step of determining (E0) at least one reference volume (Rx, $R_{X'}$, $R_{X''}$, $R_Y$) by selecting a portion or an average of portions of the image (V) comprising a central voxel (vox1, vox2, vox3) and comprising a centered strand pattern (Mx, $M_{X'}$, $M_{X''}$, $M_Y$) extending along a given direction (X, Y).

9. Skeletonization method according to one of claims 1 to 8, wherein the linking phase ($E_L$) comprises:

• a step of calculating (E4), for each oriented section center (Cx, $C_Y$), the distance ($d_X$, $d_Y$) separating it from the closest center ($C_X$, $C_Y$) of same orientation, and

• when the distance (dx, $d_Y$) is less than a maximum distance ($d_{Xmax}$, $d_{Ymax}$), a step of plotting (E5) the curve linking each center (Cx, $C_Y$) to the closest center (Cx, $C_Y$) of same orientation.

10. Skeletonization system for the implementation of the method for skeletonizing the strands ($Tx$, $T_Y$) of a composite material part in a 3D image (V) of said part according to one of claims 1 to 9, said skeletonization system comprising at least one database (3) comprising at least one reference volume ($Rx$, $R_{X'}$, $R_{X''}$, $R_Y$) comprising a centered strand pattern ($Mx$, $M_{X'}$, $M_{X''}$, $M_Y$) extending along a given direction (X, Y), said skeletonization system comprising at least one calculation member (2) which, for each reference volume ($Rx$, $R_{X'}$, $R_{X''}$, $R_Y$), is configured to:

> • determine portions ($P_X$, $P_Y$, $P_{X1}$, $P_{X2}$, $P_{X3}$) of the image (V) of dimension equal to that of the reference volume ($R_X$, $R_{X'}$, $R_{X''}$, $R_Y$),
> • calculate a correlation score ($Sx$, $S_Y$, $S_{X1}$, $S_{X2}$, $S_{X3}$, $S_{X3'}$, $S_{X3''}$) between the reference volume ($Rx$, $R_{X'}$, $R_{X''}$, $R_Y$) and each portion ($Px$, $P_Y$, $P_{X1}$, $P_{X2}$, $P_{X3}$) of the image (V) by comparison of the gray level (N) of their respective voxels (vox), said correlation score ($S_X$, $S_Y$, $S_{X1}$, $S_{X2}$, $S_{X3}$, $S_{X3'}$, $S_{X3''}$) being associated with the central voxel (vox1, vox2, vox3) of each portion ($Px$, $P_Y$, $P_{X1}$, $P_{X2}$, $P_{X3}$), so as to obtain a correlation score ($Sx$, $S_Y$, $S_{X1}$, $S_{X2}$, $S_{X3}$, $S_{X3'}$, $S_{X3''}$) for each voxel (vox) of the image (V) forming a matrix of correlation scores, and
> • determine the oriented section centers ($Cx$, $C_Y$) of the strands ($Tx$, $T_Y$) of the part, said centers ($Cx$, $C_Y$) corresponding to the central voxels (vox1, vox2, vox3) of the portions ($P_X$, $P_Y$, $P_{X1}$, $P_{X2}$, $P_{X3}$) of which the correlation score ($S_X$, $S_Y$, $S_{X1}$, $S_{X2}$, $S_{X3}$, $S_{X3'}$, $S_{X3''}$) corresponds to a local maximum of the matrix of correlation scores, the orientation of said centers ($Cx$, $C_Y$) being defined by the direction (X, Y) of the strand pattern ($Mx$, $M_{X'}$, $M_{X''}$, $M_Y$) of the reference volume ($Rx$, $R_{X'}$, $R_{X''}$, $R_Y$),
> • said calculation member (2) being in addition configured to link each center ($Cx$, $C_Y$) to the closest center ($Cx$, $C_Y$) of same orientation, in order to link the centers ($C_X$, $C_Y$) associated with a same strand ($T_X$, $T_Y$) so as to obtain the skeleton ($Sq_X$, $Sq_Y$) of the strands ($T_X$, $T_Y$) of the part.

[Fig. 1]

FIG. 1

[Fig. 2]

FIG. 2

[Fig. 3]

V

$E_{D\text{-}AA}$

$C_X$, $C_Y$

$E_{L\text{-}AA}$

$Sq_X$, $Sq_Y$

## FIG. 3

[Fig. 4]

## FIG. 4

[Fig. 5]

FIG. 5

[Fig. 6]

FIG. 6

[Fig. 7]

FIG. 7

[Fig. 8]

## FIG. 8

[Fig. 9]

FIG. 9

[Fig. 10A]

FIG. 10A

[Fig. 10B]

FIG. 10B

[Fig. 11A]

FIG. 11A

[Fig. 11B]

FIG. 11B

[Fig. 11C]

## FIG. 11C

[Fig. 12]

## FIG. 12

[Fig. 13]

FIG. 13

[Fig. 14]

FIG. 14

[Fig. 15]

**FIG. 15**

[Fig. 16]

**FIG. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *A 3D image analysis method for fibrous microstructures : Discretization and fibers tracking,* 2012
- *Composites : Part A, Fiber orientation measurements in composite materials,* 2006
- *Analysis of woven fabric structure using X-ray CT images,* 2005
- Numerical reconstruction of graphite/epoxy composite microstructure based on sub-micron resolution X-ray computed to-mography. *Composite Science and Technology*
- **P. SOILLE.** Morphological Image Analysis : Principles and Applications. 2003